# EUROPÄISCHE PATENTSCHRIFT

(11) **EP 1 014 531 B1**
(45) Veröffentlichungstag und Bekanntmachung des Hinweises auf die Patenterteilung: **10.03.2010**
(21) Anmeldenummer: 99125477.2
(22) Anmeldetag: 21.12.1999
(51) Int. Cl.: H02J 5/00

(54) **Energieversorgungsvorrichtung für explosionsgeschützte elektronische Funktionseinheiten**
Power supply apparatus for explosion-proof electronic components
Appareil d'alimentation en énergie électrique pour composants électroniques anti-déflagrant

(30) Priorität: 23.12.1998 DE 19859715; 14.10.1999 DE 19949649
(43) Veröffentlichungstag der Anmeldung: 28.06.2000
(73) Patentinhaber: Hans Turck Gmbh & Co. KG, 45472 Mülheim (DE)
(72) Erfinder: Schwarzfischer, Johann, 45239 Essen (DE); Volz, Hubert, 45470 Mühlheim a.d. Ruhr (DE)
(74) Vertreter: Grundmann, Dirk

(56) Entgegenhaltungen:
- EP-A- 0 357 829
- WO-A-96/02970
- GB-A- 1 428 188
- US-A- 4 342 061
- US-A- 5 301 096

## Beschreibung

Die Erfindung betrifft eine Vorrichtung zur Energieversorgung für explosionsgeschützte Funktionseinheiten gemäß Gattungsbegriff des Anspruchs 1.

Derartige Vorrichtungen zur Energieversorgung einer Vielzahl von auf einem gemeinsamen Träger steckbaren elektronischen Funktionseinheiten in einem explosionsgefährdeten Bereich sind im Stand der Technik bekannt. Die Funktionseinheiten bildenden Module, die auf Steckleisten einer Trägerplatine aufgesteckt werden können. Über die Steckleisten werden Datenleistungskontakte und Energieversorgungsleitungskontakte geschlossen. Derartige, bei der Energieversorgung von Feldbussen verwendeten Vorrichtungen dienen auch zur Signalwandlung zwischen in einem explosionsgefährdeten Bereich angeordneten, insbesondere analoge Signale über eine Signalleitung empfangende und sendende Aktoren oder Sensoren und einem insbesondere digitale Daten über eine Datenleitung empfangenden und sendenden Leitrechner. Zur Vorrichtung führen eine Vielzahl von Signalleitungen, die jeweils mit einem Aktor oder Sensor verbunden sind. Die Aktoren bzw. Sensoren befinden sich im explosionsgefährdeten Bereich und sind dementsprechend ausgerüstet, um dort verwendet werden zu können.

Liegt die Vorrichtung ebenfalls im explosionsgeschützten Bereich, besteht die Problematik der Energieversorgung der Module darstellenden Funktionseinheiten darin, dass bei Abtrennung der Funktionseinheit von der Energieversorgung keine Funken entstehen dürfen. Bei der im Stand der Technik bekannten Vorrichtung wird die zu übertragende Energie als Gleichstrom übertragen und durch Widerstände auf ein solches Maß reduziert, dass beim Öffnen der Zuleitung keine Funken entstehen. Nachteilhaft bei dieser Vorrichtung ist zum einen die in den Widerständen entstehende Wärme und zum anderen die begrenzte Möglichkeit von einem Netzteil eine Vielzahl von Modulen mit einer Betriebsspannung zu versorgen.

Der Erfindung liegt daher die Aufgabe zugrunde, die eingangs beschriebene Vorrichtung betriebssicherer auszugestalten.

Die Aufgabe wird durch die in den Ansprüchen angegebene Erfindung gelöst, wobei darauf abgestellt ist, dass die Betriebsspannung eine Wechselspannung ist. Die Energieauskopplung aus dem Modulträger in die Module erfolgt induktiv oder kapazitiv gedrosselt. Die hierzu verwendete Drossel ist jedem Modul individuell zugeordnet und zwar in Form eines Blindwiderstandes im Wechselstromkreis. Die Drossel wird vorzugsweise von einem Kondensator bzw. einer Spule ausgebildet. Die Kapazität des Kondensators bzw. die Induktivität der Spule ist dabei derart an die Ausgangsfrequenz der auszukoppelnden Wechselspannung angepasst, dass sich ein geeigneter Blindwiderstand ergibt. Geeignete Blindwiderstände können im Bereich zwischen 1 und 1.000 Ohm liegen. Als Kapazitäten kommen bevorzugt Werte zwischen einem 1 nF und 10 nF in Betracht. Als Drosselspulen werden vorzugsweise Spulen von 1 µH bis 10 µH verwendet. Die Ausgangsspannuug hat vorzugsweise eine Frequenz zwischen 200 und 300 kHz Die Drosselglieder können in beide Energieversorgungsleitungen eingeschaltet sein, so kann bspw. die Drossel aus zwei Kondensatoren oder zwei Spulen bestehen.

Die Funktionseinheiten und der Träger bzw. die Betriebsspannungsquelle und der Träger können jeweils einen Kern und Wicklung aufweisender Teil eines trennbaren induktiven Übertragers aufweisen. Insbesondere ist der dem Träger zugeordnete Übertragungsteil entweder stromgeregelt in Serie oder individuell vorbeschaltet mechanisch in Reihe bzw. elektrisch parallel geschaltet. Mit einer gemeinsamen Energieversorgung wird eine Vielzahl von Funktionseinheiten mit Energie ersorgt, wobei einzelne Funktionseinheiten während des Betriebes der übrigen Funktionseinheiten beliebig gesteckt oder abgezogen werden. Bei in Serie geschalteten Spulen der Übertragerteilen wird die sich beim Stecken bzw. Abziehen geänderte Induktivität durch eine Stromregelung kompensiert, die den sich erhöhenden oder erniedrigenden Blindwiderstand ausgleicht.

Werden die Spulen der Übertragerteil parallel geschaltete so ist jeder Spule ein Schalter vorgeordnet. Mit dieser Beschaltung kann jede einzelne Spule individuell aktiviert oder deaktiviert werden. Vorzugsweise erfolgt die Beschaltung durch das Einstecken oder Abziehen der Funktionseinheit. Das der Spule vorgeschaltete Element kann als Magnetschalter (Reedkontakt) ausgebildet sein. In diesem Falle trägt die Steckkarte einen Magneten, der bei eingesteckter Karte den Reedschalter aktiviert, so dass die Primärspule des Übertragers bestromt wird. Es ist aber auch vorgesehen, dass das Vorschaltelement von einer Drossel ausgebildet wird. Diese kann ihren Blindwiderstand beim Einstecken der Karte ändern. Hierzu wird insbesondere der Kern der Drossel aus einem in die magnetische Sättigung treibbaren Material ausgebildet. Die Karte trägt dann einen Magneten, der in die Nähe der Drossel gebracht dort den Kern in die Sättigung treibt. Ferner kann vorgesehen sein, dass der Kern der Drossel einen Spalt ausbildet. In diesen Spalt taucht beim Einstecken der Karte eine Spule ein, die kurzgeschlossen ist. Diese Spule kann als Planarspule ausgebildet sein.

In einer bevorzugten Variante der Erfindung ist vorgesehen, dass die Betriebsspannungsversorgung aus zwei Wechselspannungsquellen besteht, die galvanisch getrennt sind. Die Primärseiten der Übertrager besitzen dann zwei Primärspulen, wobei jede Primärspule mit einer Wechselstromquelle verbunden ist. Beim Ausfall eines Netzteiles kann die volle Leistung durch das andere Netzteil erbracht werden. In einer ersten Betriebsart ist vorgesehen, dass die Leistungssteuerung der beiden Netzteile über die Phasenlage der beiden Wechselspannungen erfolgt. In einer zweiten Betriebsart kann die Leistungssteuerung der beiden Netzteile phasenstarr über die Addition der Primärspannungen erfolgen. Die Leistungssteuerung der beiden Netzteile kann über die Phasenlage der beiden Wechselspannungen erfolgen. Die beiden Primärspannungen können sich addieren. Die Amplituden der beiden Primarspannungen können gleichgroß sein. Die Amplituden der beiden Primärspannungen können sich aber auch teilweise subtrahieren. Falls ein Netzteil fehlerhaft nur volle Leistung bringt, kann das andere die überschüssige Leistung durch Subtraktion der Primärspannungen kompensieren. Die Leistungssteigerung kann auch durch eine Kombination beider Betriebsarten erfolgen, wobei sowohl die Amplitude variiert wird als auch die Phase.

Die angelegte Primärspannung kann sinusförmig sein. Ein Betrieb mit Dreieck- oder Trapez- oder Rechteckspannungem ist ebenfalls vorgesehen. Die einzelne Impulse können Tastlücken bzw. sich ändernde Puls-/Pausenverhältruisse aufweisen. Bei mehreren Primärwicklungen kann die Kurvenform der Frimärspannungen auch unterschiedlich sein. Auf der Sekundärseite können ein oder mehrere Sekundärspulen vorgesehen sein. Werden die Primärspulen in Serie betrieben, so ist vorgesehen, dass zumindest durch eine Sekundärspule ein Minimalstrom fließt.

Es ist dabei vorgesehen, dass der Modulträger mit einer Wechselspannung betriebsspannungsversorgt ist und dass die Betriebsspannungsverbindung im Wesentlichen funkenfrei trennbar ist. Zufolge dieser Ausgestaltung können die einzelnen Module auch im explosionsgefährdeten Bereich vom Modulträger getrennt werden, ohne dass schädliche, eine Explosion auslösende Funken insbesondere beim Trennen der Betriebsspannungsverbindung auftreten. Wird diese Art der Leistungsübertragung zwischen Netzteil und dem Modulträger vorgesehen, so können auch die Netzteil-Karten ohne dass Funken entstehen aus der Vorrichtung bspw. zum Zwecke der Wartung herausgezogen werden. Die Energieeinspeisung wird bevorzugt von einem trennbaren, induktiven Übertrager ausgebildet. Dabei kann der trennbare Übertrager eine erste, fest mit dem Modulträger verbundene, eine Primärwicklung aufnehmende Kernhälfte und eine zweite, fest mit dem Modul verbundene, eine Sekundärwicklung aufweisende Kernhälfte aufweisen. Ist diese Verbindung zwischen Netzteil und Modulträger vorgesehen, so befinden sich die Primärwicklungen auf den Netzteil-Karten. Die Sekundärwicklungen befinden sich auf der Modulträger-Platine. Die Betriebsspannungsverbindung besteht damit aus einem zweiteiligen Transformator, wobei die eine Transformatorhälfte dem Modulträger und die andere Transformatorhälfte dem Modul zugeordnet ist. Beim Aufstecken des Moduls auf den Modulträger bildet sich dann insbesondere durch in-Berührung-bringen der beiden Kernteile an der Schnittstelle ein voll funktionsfählger Transformator aus, der die Betriebswechselspannung auf das Modul überträgt. Es kann insbesondere vorgesehen sein, dass die Primärwicklung aus zwei Halbwicklungen besteht, wobei die Halbwicklungen jeder der reihenförmig nebeneinanderliegenden Primärkernhälften in Reihe geschaltet sind und die Halbwicklungen der letzten Primärkernhälfte der Reihe miteinander verbunden sind. Ferner kann vorgesehen sein, dass die Sekundärwicklung eine Vielzahl von galvanisch getrennten Einzelwicklungen ausbildet. Dies hat den Vorteil, daß auf einem Modul eine Vielzahl von Schaltkanälen angeordnet sein können, die zufolge der Vielzahl der Primärwicklungen galvanisch voneinander getrennt sind. Der trennbare Übertrager kann die Betriebsspannung auch hoch oder herunter transformieren. Insbesondere ist vorgesehen, daß die Primärspannung eine Wechselspannung von bspw. ca. 20 Volt ist und die Sekundärspannung eine hochtransformierte Spannung von bspw. ca. 30 Volt ist. Um eine möglichst effiziente Leistungsübertragung zu gewährleisten liegt die Wechselspannung vorzugsweise im Hochfrequenzbereich und dort im Bereich von 200 bis 300 kHz. Ferner kann vorgesehen sein, daß die Betriebsspannung durch Blindwiderstände leistungsbegrenzt ist. Auch durch diese Maßnahme ist gewährleistet, daß eine Funkenbildung beim Abziehen der Karte unterdrückt ist. Die Blindwiderstände können dabei auch im Stromkreis der Sekundärwicklungen liegen. Aus der Betriebswechselspannung kann auf den Modulen wieder eine Betriebsgleichspannung gewonnen werden. Ferner kann vorgesehen sein, daß beide Leitungen der Spannungsversorgung je einen Kondensator zur Leistungsbegrenzung aufweisen. Bei den Modulen handelt es sich insbesondere um Träger elektronischer Schaltungen. Es kann aber auch vorgesehen sein, daß die Module lediglich Steckerelemente sind, die mit entfernt von der Signalwandlungsvorrichtung angeordneten Schaltungsträgern kabelverbunden sind. Die Betriebswechselspannung, die auf die Module übertragen wird, kann aus einer Gleichspannung gewonnen werden.

Eine weitere Variante der Erfindung sieht vor, daß die Module über elektrisch leitende Verbindungen seitens des Modulträgers mit der Betriebsspannung versorgt werden. In diesem Falle ist den netzteilseitigen Kontakten eine Drossel vorgeschaltet. Diese Drossel besteht aus einer Spule und einem Ferritkern. Jeweils einem Modulsteckplatz kann eine Drossel auf dem Modulträger zugeordnet sein. Die Drossel kann als Planarspule ausgebildet sein, wobei die jeweilige Spule im wesentlichen nur den beiden äußeren Schenkel des insbesondere E-förmigen Spulenkernes zugeordnet ist, welche Schenkel Öffnungen der Modulträgerplatine durchgreifen. Die Drosselspule wird ferner bevorzugt von einer vollisolierten Leiterbahn einer mehrlagigen Platine ausgebildet. Die Leiterbahn ist jeweils mit einer etwa 1 mm starken Epoxydschicht nach außen hin und einer etwa 0,5 mm starken Epoxydschicht zur anderen Leiterbahn isoliert. Die im wesentlichen E-förmigen Spulenkerne liegen auf der Trägerplatine in Reihe nebeneinander. Dies ermöglicht eine günstige Sammelbefestigung. Hierzu wird die gesamte Reihe von einer U-förmigen Leiste überfangen und gehalten. Die Montage wird vereinfacht, wenn eine der beiden Kernhälften des Drossel-Kerns mit der Platine kleberverbunden ist, wobei die Schenkel bereichsweise durch die Öffnungen der Platine hindurchragen. Sodann werden die Kerne von der anderen Seite durch Aufkleben der zugehörigen Kern-Gegenstücke geschlossen. Diesseits und jenseits der Platine erfolgt dann die Auflage der U-förmigen Leiste über die jeweiligen Kernhälften. Die Leisten sind endseitig durch Verbindungselemente in Form von Nieten oder Schrauben miteinander verbunden. Die Parameter der Drosselspule, wie bspw. Kernwerkstoff, Spulendurchmesser und Windungszahl sind so gewählt, daß die Permeabilität im wesentlichen temperaturkonstant ist, und zwar über den gesamten Bereich der Aussteuerung der Betriebsspannungsversorgung, also insbesondere bei dem bei einem Kurzschluß auftretenden maximalen Wert des B-Feldes.

Eine weitere Variante der Erfindung betrifft die Leistungsbegrenzung der Energieversorgung auf einem Modul. Die zur Leistungsbegrenzung dienende Drossel braucht gemäß dieser Variante nicht körperlich eigenständig vorhanden sein. Es ist vielmehr vorgesehen, daß die Wirkung der Drossel von einem Übertrager erbracht wird. Hierzu wird ein Übertrager mit einem magnetischen Nebenschluß verwendet. Dabei sind die parasitären Induktivitäten des Übertragers entsprechend groß ausgestaltet. Die Streuinduktivität des Übertragers kann dabei bspw. 4 bis 10 % der Gesamtinduktivität oder mehr betragen. Zur Verwirklichung eines derartigen Übertragers kann der Kern des Übertragers aus zwei langgestreckten U-Hälften bestehen. Der dadurch ausgebildete vier-schenklige, rechteckringförmige Kern trägt an seinen schmalseitigen Schenkeln jeweils die Primärspule bzw. die Sekundärspule, so daß diese relativ weit voneinander beabstandet sind. Zwischen den beiden diese Schenkel miteinander verbindenden Schenkel kann sich ein Nebenschlußfeld aufbauen. In einer Weiterbildung der Erfindung kann vorgesehen sein, daß sich Primärspule und Sekundärspule, jeweils als Planarspule aufgebaut, bereichsweise überlappen. Hierzu kann bspw. die Primärspule von einer ersten Leiterbahnschicht ausgebildet sein und die Sekundärspule von einer zweiten Leiterbahnschicht.

Eine weitere Variante der Erfindung betrifft eine Weiterbildung des Netzteils. Die Versorgungsspannung zweiter Netzteile wird im Wege jeweils eines trennbaren Übertragers dem Träger zugeführt, wobei die Sekundärspule des Übertragers dem Träger und die Primärspule der Netzteilplatine zugeordnet ist, wobei weiter die Sekundärspule nur bei eingestecktem und Spannung lieferndem Netzteil in den Sekundärkreis geschaltet ist. Auf dem Träger kann dabei ein Schalter vorgesehen sein, welcher die Spule nur dann schaltet, wenn sie von einem induktiven Wechselfeld beaufschlagt wird. Dieser Schalter kann als Relais ausgebildet sein, welches von einem im Primärkreis des Netzteiles geschalteten Hilfstransformator bestromt wird. Die von dem Hilfstransformator gelieferte Spannung und niedrige Leistung wird über leitenden Kontakte der Trägerplatine zugeführt. Alternativ kann der Hilfstransformator ein trennbarer Übertrager sein. Die Primärspule kann dem Netzteil und die Sekundärspule dem Modulträger zugeordnet sein. Die Steckkontakte können dann entfallen.

Ausführungsbeispiele der Erfindung werden nachfolgend anhand beigefügter Zeichnungen erläutert. Es zeigen:
- Fig. 1: eine schematische Darstellung eines Feldbus-Systemes gemäß der Erfindung;
- Fig. 2: eine schematische Darstellung eines Moduls;
- Fig. 3: eine schematische Darstellung eines Modulträgers;
- Fig. 4: eine schematische Darstellung eines trennbaren Übertragers;
- Fig. 5: eine erstes Schaltungsbeispiel;
- Fig. 6: ein zweites Schaltungsbeispiel;
- Fig. 7: ein drittes Schaltungsbeispiel;
- Fig. 8: ein erstes Schaltbild einer Leistungsbegrenzung;
- Fig. 9: ein zweites Schaltbild einer Leistungsbegrenzung;
- Fig. 10: ein zweites Ausführungsbeispiel eines Modulträgers;
- Fig. 11: einen vergrößerten Schnitt gemäß der Linie XI-XI in Fig. 10;
- Fig. 12: einen Ausschnitt aus einem Modulträger eines weiteren Ausführungsbeispiels in vergrößerter Darstellung;
- Fig. 13: einen Schnitt gemäß der Linie XIII-XIII in Fig. 12;
- Fig. 14: ein weiteres Ausführungsbeispiel einer Beschaltung eines Modulträgers;
- Fig. 15: ein Ausführungsbeispiel eines Vorschaltelementes;
- Fig. 16: ein weiteres Ausführungsbeispiel eines Vorschaltelementes,
- Fig. 17: ein weiteres Schaltungsbeispiel einer Signalwandlungsvorrichtung;
- Fig. 18: ein weiteres Ausführungsbeispiel einer Signalwandlungsvorrichtung;
- Fig. 19: ein Ausführungsbeispiel einer Betriebsspannungsversorgung mit zwei redundanten Netzteilen;
- Fig. 20: die Darstellung der Phasenlage der beiden Netzteile beim Ausführungsbeispiel gemäß Fig. 19 in einer ersten Betriebsvariante;
- Fig. 21: eine Darstellung gemäß Fig. 20 in einer zweiten Betriebsvariante;
- Fig. 22: eine Darstellung gemäß Fig. 20 in einer dritten Betriebsvariante;
- Fig. 23: die schematische Darstellung einer leistungsbegrenzenden Drossel bei der Spannungsversorgung der Modulsteckplätze;
- Fig. 24: eine Variante für eine leistungsbegrenzende Drossel zur Modulsteckplatzstromversorgung;
- Fig. 25: das Beispiel einer Wechselspannung bzw. eines Wechselstroms, mit welchem die Drossel beaufschlagt wird;
- Fig. 26: die schematische Darstellung des Aufbaues einer Drossel;

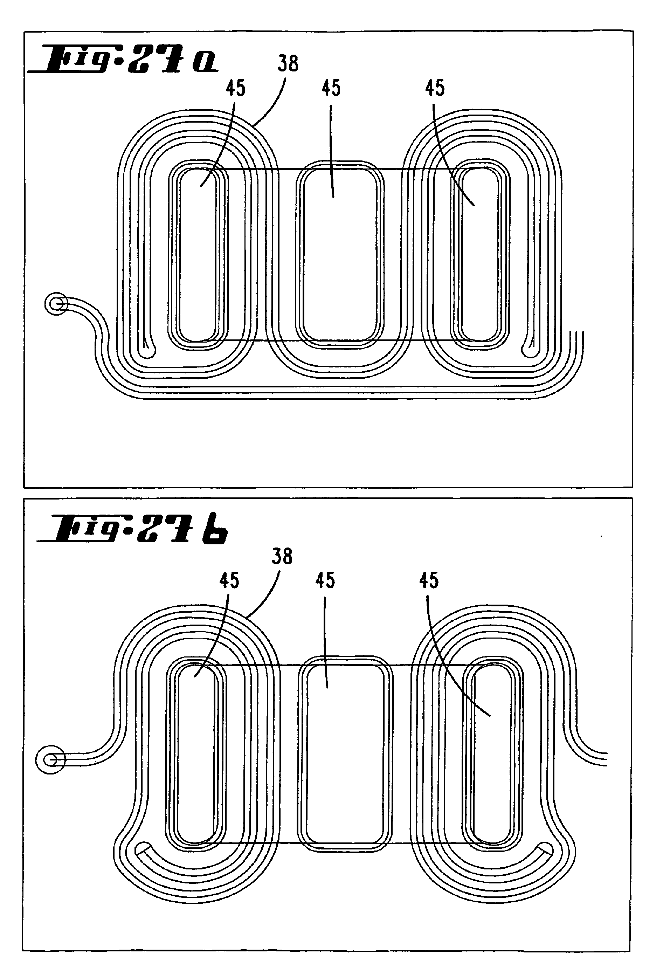

- Fig. 27a: die Ausgestaltung einer Planarspule für eine Drossel auf einer ersten Leiterbahn;
- Fig. 27b: eine Darstellung gemäß Fig. 23a der Fortsetzung der Planarspule auf einer zweiten Leiterbahn;
- Fig. 28: einen Schnitt durch eine Mehrlagen-Leiterplatte;
- Fig. 29: die schematische Darstellung eines montierten Drossel-Kernes im Schnitt;
- Fig. 30: die schematische Darstellung der Montage einer Vielzahl von in Reihe nebeneinanderliegender Drosseln;
- Fig. 31: die schematische Darstellung eines Übertragers mit großem magnetischen Nebenschluß;
- Fig. 32: das elektrische Ersatzschaltbild;
- Fig. 33: das Beispiel einer Ausführung eines Übertragers ähnlich der in der Fig. 27a und 27b dargestellten Drossel;
- Fig. 34: das Schaltbild einer Spannungsversorgung eines Moduls;
- Fig. 35: einen Ausschnitt aus einer Modulträgerschaltung betreffend die Sekundärspulen einer aus zwei Netzkarten bestehenden redundanten Spannungsversorgung;
- Fig. 36: ein Schaltungsbeispiel für eine an einen Modulträger angesteckte Netzteilkarte;
- Fig. 37: ein Feldbussystem, bei dem die Drossel auf einem im explosionsgeschützten Bereich angeordneten Anschlußterminal angeordnet ist;
- Fig. 38: ein Schaltungsbeispiel einer Drossel;
- Fig. 39: ein weiteres Schaltungsbeispiel einer Drossel;
- Fig. 40: ein erstes Beispiel einer erfindungsgemäßen Energieversorgung;
- Fig. 41: ein zweites Ausführungsbeispiel einer erfindungsgemäßen Energieversorgung;
- Fig. 42: ein Schaltungsbeispiel für eine erfindungsgemäße Energieversorgung und
- Fig. 43: ein weiteres Schaltungsbeispiel für eine Drossel.

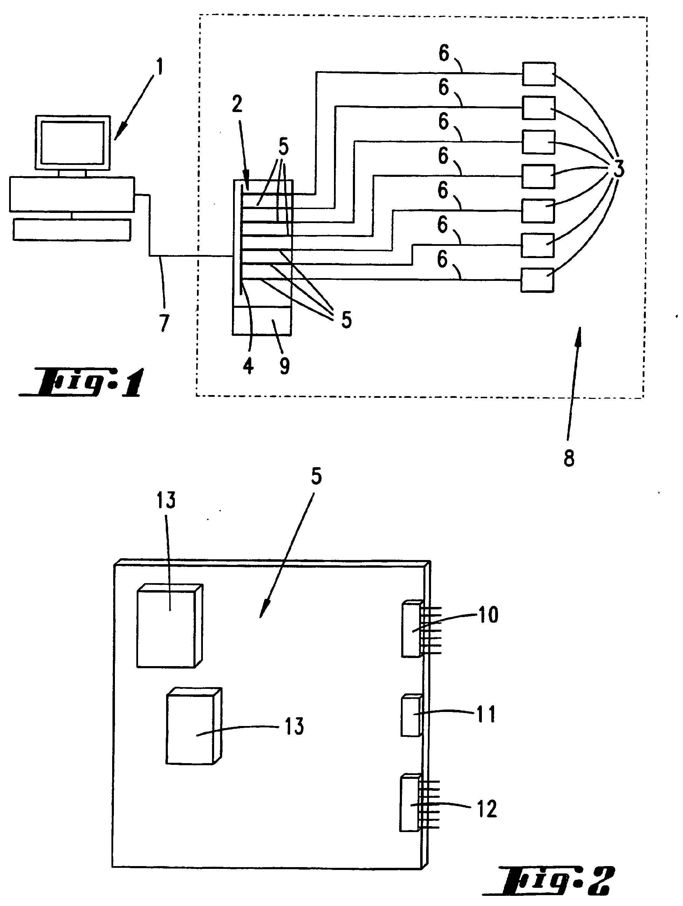

Das in Fig. 1 dargestellte Feldbus-System besteht aus einem Leitrechner 1, der mittels einer digitalen Datenleitung 7 mit einer Vorrichtung zur Signalwandlung 2 verbunden ist. In dem Signalwandler 2 befindet sich ein Netzteil 9 und ein Modulträger 4. Der Modulträger 4 besitzt eine Vielzahl von Datenübertragungs-Verbindungsstecköffnungen 14, 16 und ein Element 15 für die Betriebsspannungsverbindung. Der Modulträger 4 ist ferner in der Lage eine Vielzahl, vorzugsweise sechzehn Module in Form von Steckkarten zu tragen. Die einzelnen Steckkarten 5 werden mittels Steckern 10, 12 auf die entsprechenden Steckverbindungen 14, 16 des Modulträgers 4 aufgesteckt. Die Karten 5 können während des Betriebes des Feldbus-Systemes gesteckt und/oder gezogen werden.

Es sind zwei verschiedene Datenübertragungsverbindungen 14, 16 vorgesehen. Es gibt erste Datenübertragungsanschlüsse 14, in die Stecker 10 der Karte 5 eintreten. Die darüber übertragenen Daten werden über die digitale Datenleitung 7 zum Leitrechner übertragen oder kommen vom Leitrechner 1. Die Stecker 12 der Modulkarte 5 greifen in Steckeröffnungen 16 des Modulträgers 4 ein. Die über diese Datenverbindung 12, 16 übertragenen Daten sind die analogen oder digitalen Signale, die über eine analoge oder digitale Signalleitung 6 von den Sensoren 3 kommen bzw. zu den Aktoren 3 gelangen.

Insgesamt kann die Signalwandlungsvorrichtung in Form eines Ganzmetallgehäuses oder eines Kunststoffgehäuses ausgebildet sein. An der Gehäuserückwand ist der Modulträger 4 in Form einer Platine angeordnet mit reihenförmig angeordneten Steckverbindungen 14, 15, 16 zum Einschub der Module 5. Zur Bereitstellung der Betriebsspannung ist ein Netzgerät 9 vorgesehen. Das Netzgerät 9 erzeugt eine Wechselspannung. Die Sensoren/Aktoren 3 liegen ebenso wie die Signalwandlungsvorrichtung in einem explosionsgefährdeten Bereich 8.

In einem ersten Ausführungsbeispiel wird die Betriebswechselspannung über einen aus zwei Hälften 11, 15 bestehenden induktiven Wandler auf den Modul träger übertragen. Die beiden Wandlerhälften 11, 15 bestehen jeweils aus einer im wesentlichen E-förmigen Kernhälfte 17, 18, wobei die dem Modul 5 zugeordnete Kernhälfte 17 am Rand des Modules angeordnet ist mit den freien E-Schenkeln nach außen weisend. Die dem Modulträger 4 zugeordnete Kernhälfte 18 weist mit den freien E-Schenkeln in Karteneinsteckrichtung, so daß sich beim Einstecken der Karte die Enden der E-Schenkel der Kernhälften 17, 18 berühren. Der mittlere E-Schenkel jeder Kernhälfte 17, 18 trägt jeweils eine Spule 19, 20. Die Primärspule 20, die auf der Kernhälfte 18 des Modulträgers 4 sitzt, wird vorzugsweise mit einer Wechselspannung von wenigen Volt und einer Frequenz von 200 kHz betrieben. Die Sekundärspule 19 kann aus einer Vielzahl von Sekundärspulen 19' bestehen. Die in der Sekundärspule 19 induzierte Wechselspannung 22 kann auf dem Modulträger 5 durch nicht dargestellte Gleichrichter gleichgerichtet werden. Mit dieser gleichgerichteten Spannung können auf dem Modulträger angeordnete Schaltungselemente stromversorgt werden.

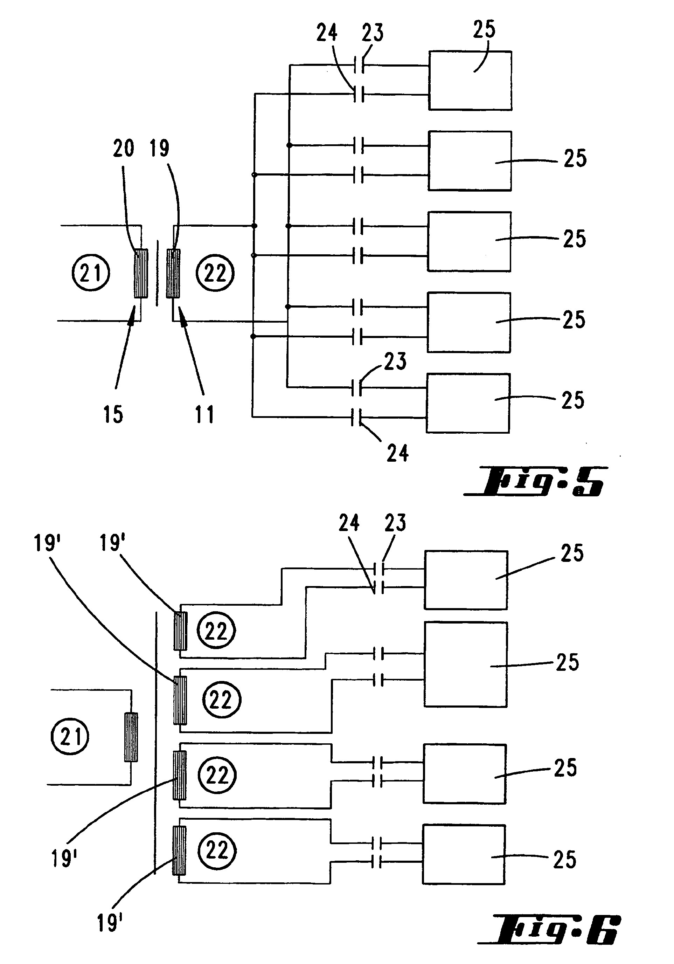

Bei dem in Figur 5 dargestellten Ausführungsbeispiel liegt eine Primärwechselspannung 21 an der Primärwicklung 20 des zweigeteilten Übertragers an. In der Sekundärwicklung 19 wird eine Wechselspannung 22 von insbesondere 30 Volt induziert. Diese induzierte Wechselspannung wird über in jede der beiden Versorgungsspannungsleitungen geschaltete Kondensatoren 23, 24 an eine Schaltung 25 übertragen. Die Schaltung 25 betrifft einen Kanal eines Sensors 3 oder eines Aktors 3. Auf der Karte 5 sind eine Vielzahl von Kanälen 25 angeordnet. Jeder Kanal 25 ist über ein Kondensatorpaar 23, 24 an die Sekundärwicklung 19 angeschlossen. Durch diese Kondensatoren 23, 24 wird eine Leistungsbegrenzung erzeugt.

Bei dem in Fig. 6 dargestellten Ausführungsbeispiel ist die Sekundärwicklung des zweigeteilten Übertragers mehrteilig ausgebildet. Lediglich beispielhaft sind insgesamt vier galvanisch getrennte Sekundärwicklungen 19' dargestellt, in denen jeweils eine Wechselspannung 22 induziert wird. Die induzierte Wechselspannung wird jeweils über Kondensatorpaare 23, 24 einer Signalauswerteschaltung 25 zugeführt.

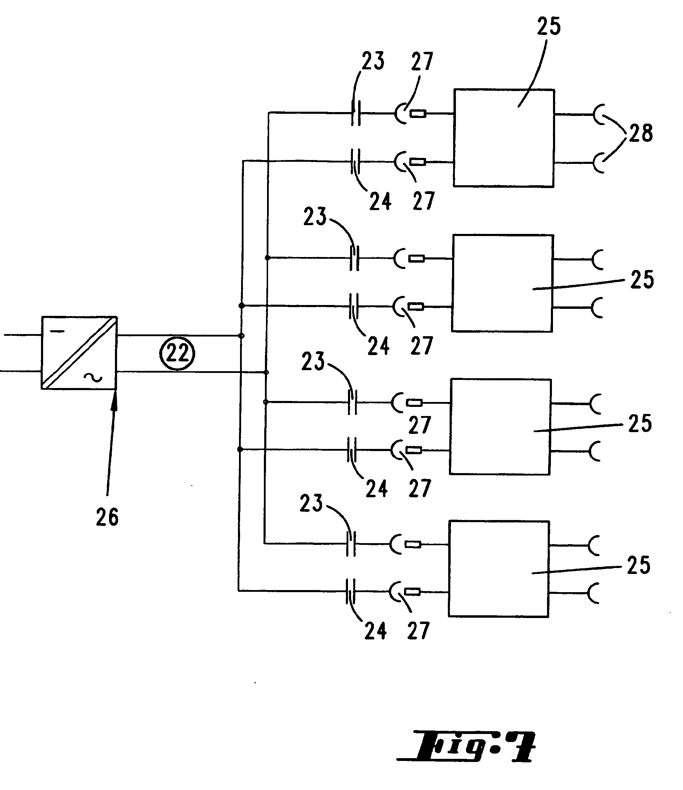

Bei dem in Fig. 7 dargestellten Ausführungsbeispiel wird die Betriebswechselspannung nicht über einen trennbaren Übertrager auf das Modul 5 übertragen. Bei dem Ausführungsbeispiel gemäß Fig. 7 ist zwischen Modulträger 4 und Modul 5 eine Steckverbindung 27 zum Übertragen einer leistungsbegrenzten Wechselspannung vorgesehen. Die in Fig. 7 dargestellte Schaltung besitzt zunächst einen Wechselspannungsgenerator 22, der eine insbesondere hochfrequente Wechselspannung 26 erzeugt. Jeder Steckverbindung 27 zum Übertragen der Betriebsspannung ist ein Leistungsbegrenzer in Form eines Kondensatorpaares 23, 24 vorgeordnet. Dabei ist in jede der beiden Leitungen der Versorgungsspannung der Kondensator 23, 24 geschaltet. Die Höhe der über die Steckverbindung 27 zu übertragenden Leistung wird durch die Kapazität des Kondensatorpaares 23, 24 bestimmt. Die Leistung ist so beschränkt, daß es beim Abziehen der Karte an der Steckverbindung 27 zu keiner wesentlichen Funkenbildung kommt. Die Leistungsbegrenzung kann auch durch eine Spule erreicht werden. Auf der nicht dargestellten Karte befindet sich eine Schaltung 25 zur Signalauswertung des Kanals. Das dem Kanal 25 zugeordnete Signal wird über eine ebenfalls leistungsbeschränkte Signalauskoppelverbindung 28 auf eine analoge Signalleitung 6 gegeben oder kommt von einer derartigen Signalleitung 6.

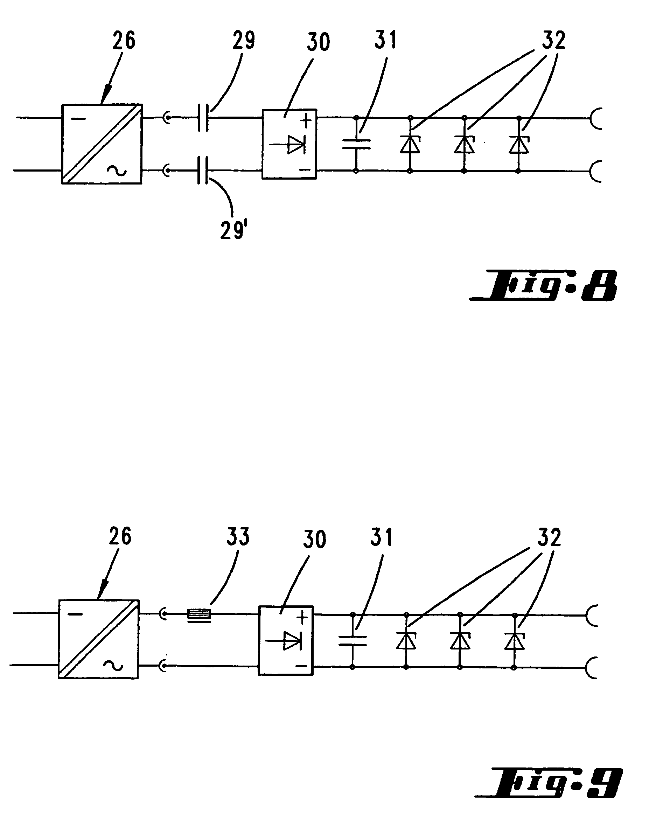

In Fig. 8 ist eine Leistungsbegrenzungsschaltung dargestellt, mittels welcher eine von einem Hochfrequenzwechselstromgenerators 26 erzeugte Wechselspannung in eine leistungsbegrenzte Gleichspannung überführt wird. Hierzu dient ein in den Wechselstromkreis geschalteter Kondensator 29, der vor einem Gleichrichter 30 sitzt. Hinter dem Gleichrichter 30 befindet sich ein Glättungskondensator 31 und eine Vielzahl von Zenerdioden 32.

Beim Ausführungsbeispiel in Fig. 9 wird der von dem Wechselstromgenerator 26 erzeugte Wechselstrom über eine Drossel 33 begrenzt. Hinter der Drossel 33 befindet sich der Gleichrichter 30. Die in den Figuren 8 bzw. 9 dargestellten Schaltungen können insbesondere auf dem Modul träger angeordnet sein und die von einer zentralen Spannungsversorgung 26 erzeugte Wechselspannung individuell für ein Modul leistungsbegrenzen und als Gleichspannung auf das Modul übertragen.

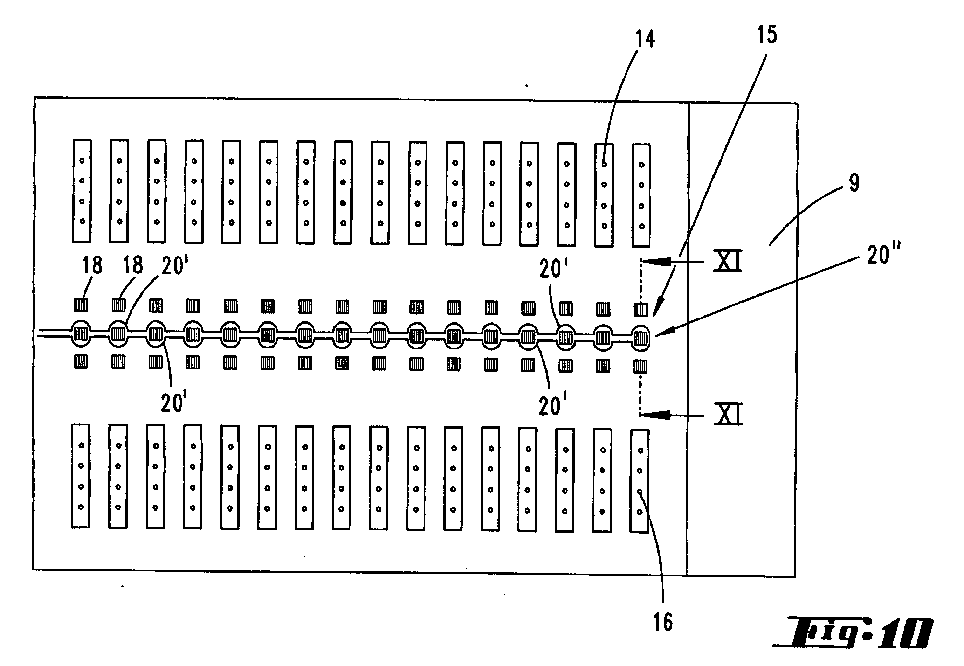

Bei der in Fig. 10 dargestellten Variante eines Modulträgers sind mit der Bezugsziffer 18 die dem Modulträger 4 zugeordneten Kernhälften dargestellt. Die Primärwicklung 20 kann dabei als Leiterbahn auf der den Modulträger 4 bildenden Platine ausgebildet sein und jeweils halbkreisförmig in Form von Halbwicklungen 20' den mittleren Kernschenkel umgeben. Die beiden Leitungen der Betriebsspannung bilden jeweils eine Halbwicklung 20' aus, wobei sich die beiden Halbwicklungen 20' gegenüberliegen. Die einzelnen Halbwicklungen 20' liegen reihenförmig nebeneinander derart, daß die in der Reihe zuletzt liegenden Halbwicklungen 20'' miteinander verbunden sind. Bei diesem Ausführungsbeispiel beträgt die Betriebswechselspannung etwa 1 Volt.

Die in den Figuren 8 und 9 dargestellten Zenerdioden können auch durch Hinzufügen eines Leistungstransistors ergänzt werden. Der erfindungsgemäße Signalwandler erzeugt nur geringe Oberflächentemperaturen an den Bauelementen, so daß er im explosionsgefährdeten Bereich unmittelbar angeordnet werden kann. Wegen der Blindwiderstände sind die thermischen Verlustleistungen reduziert. Zufolge der erfindungsgemäßen Ausgestaltung ist sichergestellt, daß ein Abziehen und Aufstecken der einzelnen Module 5 ohne Funkenbildung erfolgen kann. Dabei ist es unerheblich, ob auf den Modulen 5 selbst Schaltungen 13 angeordnet sind oder ob die Module lediglich Steckerteile sind und über eine Kabelverbindung mit Schaltungsträger verbunden sind.

Die Neuartigkeit der erfindungsgemäßen Vorrichtung liegt darin, daß durch den teilbaren Trafo eine funkenfreie Steckverbindung gewährleistet ist und eine Strombegrenzung im Wechselstromkreis durch Blindwiderstände erzielt wird, welche von Kondensatoren oder von Spulen gebildet sein können. In diesem Widerstandsnetzwerk können sowohl komplexe als auch reelle Widerstände vorhanden sein. Von Bedeutung ist ferner, daß eine gemeinsame Energieübertragung über den Modulträger erfolgt, wobei alle Primärspulen entweder parallel oder in Serie geschaltet werden. Die Primärkreise können als Planarspule auf dem Modulträger verwirklicht sein.

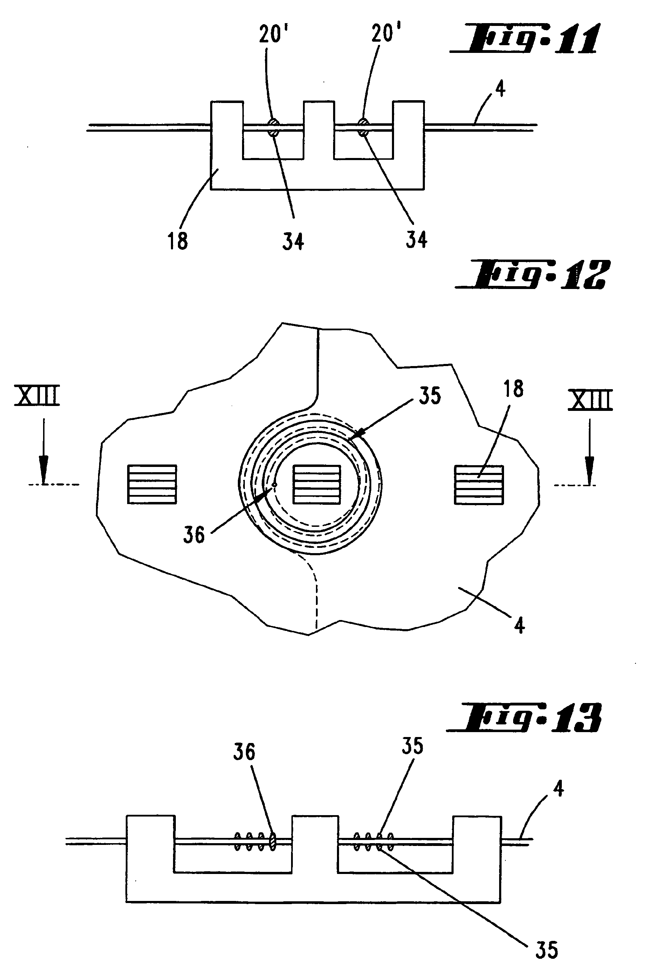

In einer bevorzugten Ausgestaltung sind zwei redundante Netzteile 9 vorgesehen. Um die Energie aus den beiden Netzteilen in die "magnetischen Steckkontakte" galvanisch getrennt einzubringen, kann die Primärwicklung aus zwei sich in der Wirkung addierenden, unabhängig voneinander arbeitenden Primärspulen bestehen. In Figur 11 ist eine erste Primärwicklung mit der Bezugsziffer 20' dargestellt, die aus einer Planarspule auf einer Platinenseite des Trägers 4 besteht. Auf der Rückseite dieser Platine befindet sich eine weitere Planarspule 34, die zum zweiten Netzteil gehört. Beim Ausführungsbeispiel in Figur 12 umgibt eine Planarspule 35 spiralförmig den mittleren Schenkel des Kernes 18. Durch eine Durchkontaktierung 36 setzt sich die Planarspule 35 auf der gegenüberliegenden Platinenseite fort.

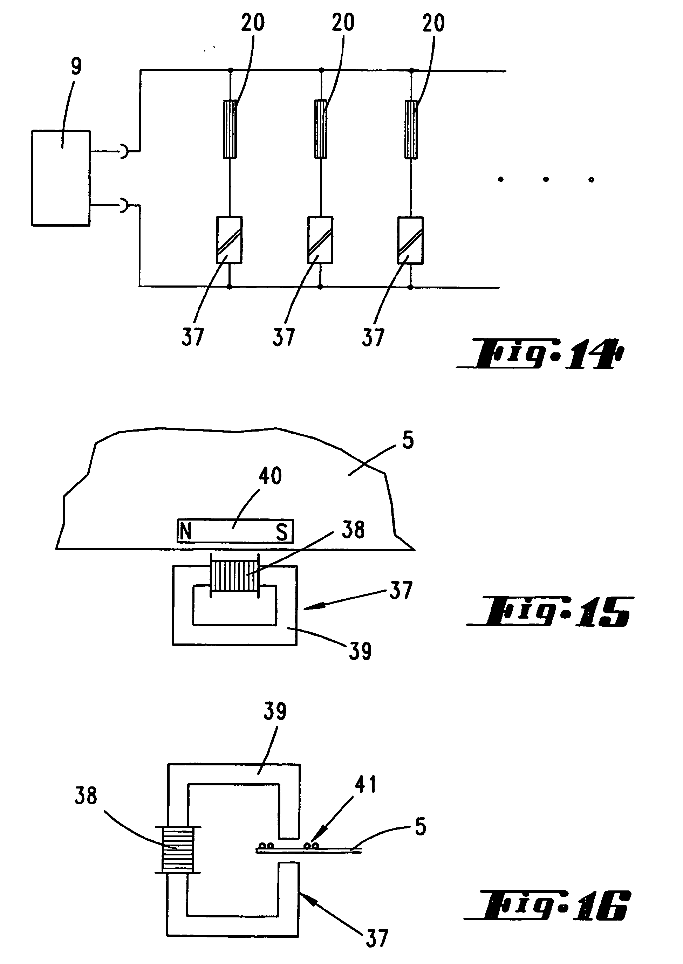

Bei der in Fig. 14 dargestellten Parallelspeisung der Primärwicklungen 20 ist jeder Primärwicklung 20 ein Vorschaltelement 37 vorgeschaltet. Bei diesen Vorschaltelementen 37 kann es sich um Schalter handeln, bspw. um einen Reedschalter. Die in den Steckkontakt einzustekkende Funktionseinheit 5 kann einen den Reedschalter betätigenden Magneten besitzen, so daß bei eingesteckter Funktionseinheit 5 der Schalter 37 schließt, so daß die Spule 20 mit Wechselstrom bestromt werden kann. Es ist aber auch möglich, daß der Funktionsträger 5 einen Magneten 40 trägt, der beim eingesteckten Modul 5 in unmittelbarer Nachbarschaft liegt zu einer Drossel 37, welche das Vorschaltelement 37 ausbildet. Die Drossel 37 kann einen Kern aus einem Material aufweisen, welches in die magnetisches Sättigung treibbar ist. Bei normalem Betrieb kann diese Drossel als Strombegrenzung genutzt werden. Es ist eine weitere Alternative einer derartigen Steuerinduktivität vorgesehen. Diese ist in Fig. 16 dargestellt. Dort besitzt die Drossel 37 einen Kern 39 mit einem Spalt. In diesen Spalt kann ein Abschnitt der Funktionseinheit 5 ragen. Dieser Abschnitt kann eine Planarspule 41 tragen, die kurzgeschlossen ist.

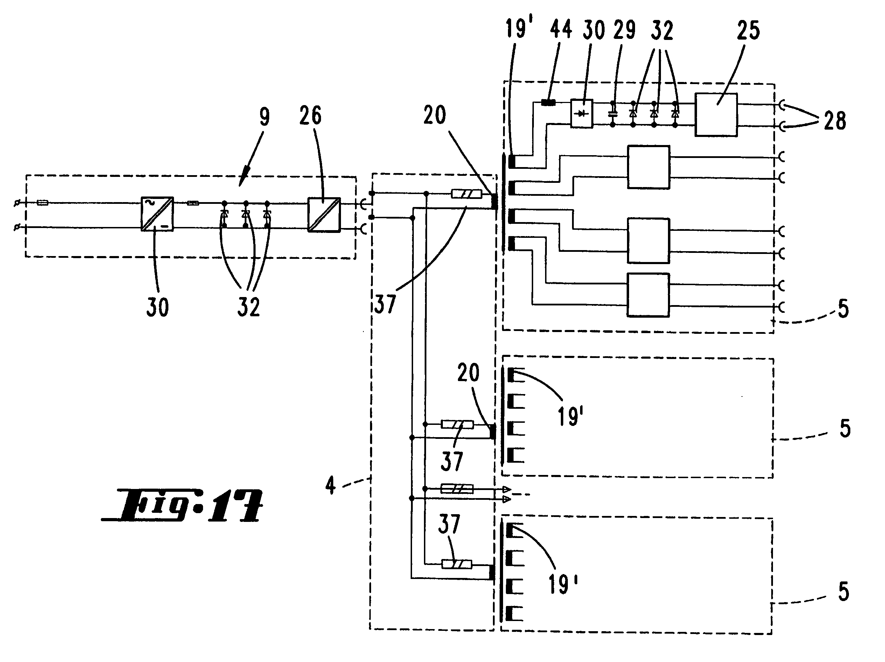

Beim Ausführungsbeispiel, welches in der Figur 17 dargestellt ist, besteht die Spannungsversorgung 9 aus einem Netzteil 30, welches eine Gleichspannung liefert, die mittels Zenerdioden 32 spannungsbegrenzt ist. Über einen Wechselrichter 26 wird eine trapezförmige Wechselspannung erzeugt mit einer Frequenz von ca. 200 kHz. Über eine Steckbrücke wird diese Wechselspannung den Leiterbahnen des Modulträgers 4 zugeführt. Auf dem Modulträger 4 befinden sich in Parallelschaltung (vgl. Fig. 14) eine Vielzahl von Primärwicklungen 20 der trennbaren Übertragerhälften. Jeder dieser Primärwicklung 20 ist ein Vorschaltelement vorgeschaltet.

Die Sekundärseiten der Übertrager bilden Sekundäreinzelspulen 19' aus, die über eine Drossel 44 einem Gleichrichter 30 vorgeschaltet sind, welcher Gleichrichter 30 eine individuelle und galvanisch getrennte Stromversorgung ausbildet für eine Schaltung 25.

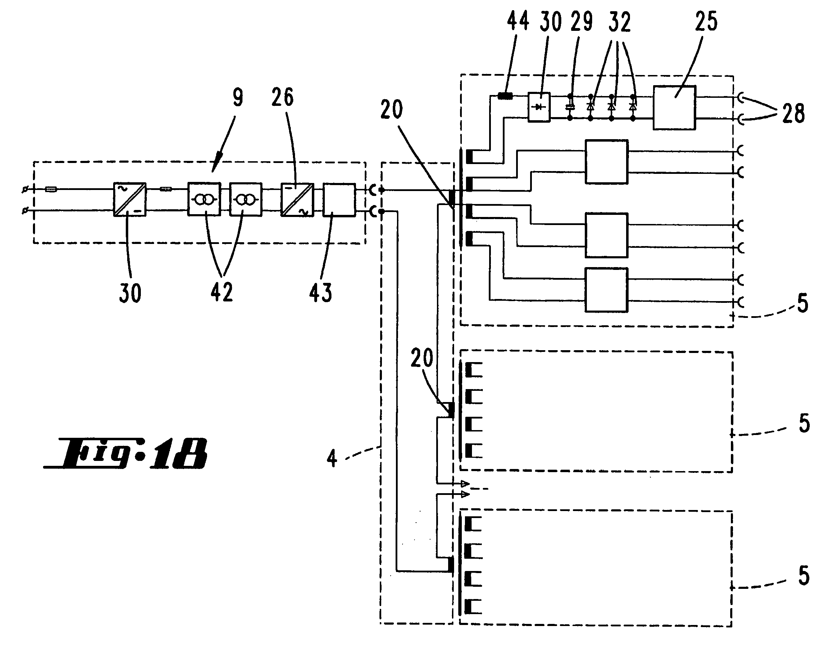

Bei dem in Figur 18 dargestellten Ausführungsbeispiel sind die Primärwicklungen 20 in Serie geschaltet. Dem Gleichrichter 30 ist eine Strombegrenzung 42 nachgeordnet. Der Strombegrenzung 42 ist ein Wechselrichter 26 nachgeordnet. Hinter dem Wechselrichter 26 befindet sich eine Stromregelung 43, um den Strom in dem Wechselstromkreis auf dem Modul träger 4 nachzuregeln, so daß durch die Primärwicklungen 20 immer genügend Strom fließt, unabhängig davon, wieviele Module 5 aufgesteckt sind. Bei dieser Schaltung ist vorgesehen, daß zumindest durch eine Sekundärspule ein Minimalstrom fließt.

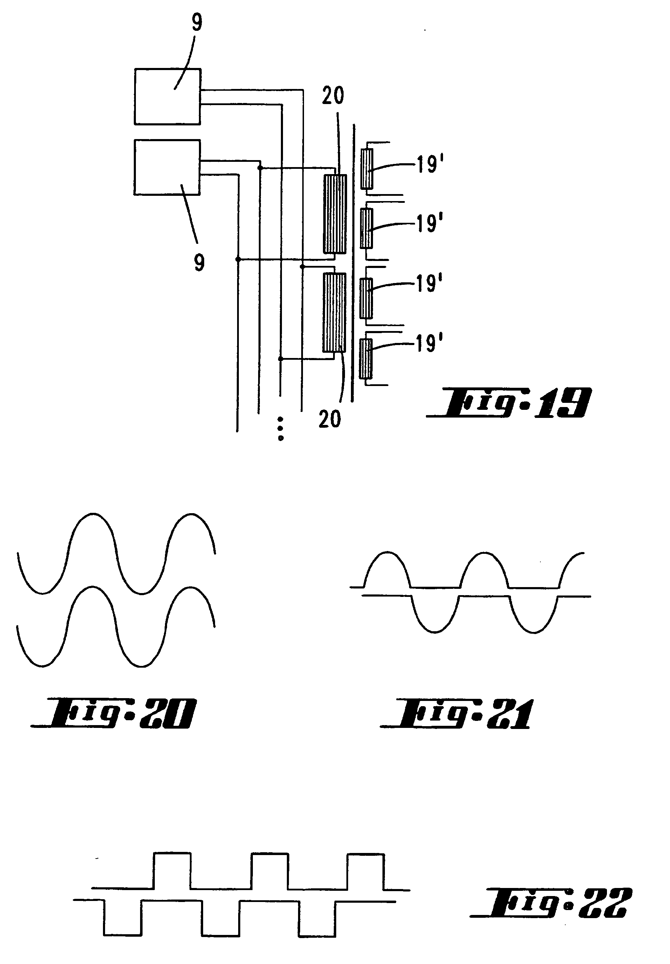

Figur 19 zeigt ein Schaltungsbeispiel einer aus zwei redundanten Netzteilen bestehenden Spannungsversorgung. Jede dem Modul träger 4 zugeordnete Übertragerhälfte besitzt zwei galvanisch getrennte Primärspulen 20, die jeweils mit einem Netzteil 9 spannungsverbunden sind. Bei dieser technischen Lösung können die beiden Primärspannungen phasenstarr gekoppelt sein, so daß sich die Wirkung beider Primärwicklungen addieren. Die Amplituden der Primärspannungen können, müssen aber nicht gleichgroß sein. Die Phasenwinkel beider Primärspannungen können so gegeneinader verschoben sein, daß sich die Wirkungen subtrahieren. Wenn bspw. ein Netzteil fehlerhaft arbeitet und bspw. volle Leistung liefert, kann das zweite, ordnungsgemäß arbeitende Netzteil die überschüssige Leistung kompensieren. Auch dies kommt dem Explosionsschutz zugute. Sowohl Primär- als auch Sekundärwicklungen können als Planarspule ausgebildet sein.

Die angelegte Primärspannung kann sinusförmig sein. Ein betrieb mit Dreieck- oder Trapez oder Rechteckspannungen ist ebenfalls denkbar. Die einzelnen Impulse können - wie in Fig. 22 dargestellt - Tastlücken bzw. sich ändernde Puls-/Pausenverhältnisse aufweisen. Insbesondere kann vorgesehen sein, daß - wie in Fig. 21 dargestellt - das eine Netzteil die positive Halbwelle und das andere Netzteil die dazu phasenverschobene negative Halbwelle liefern.

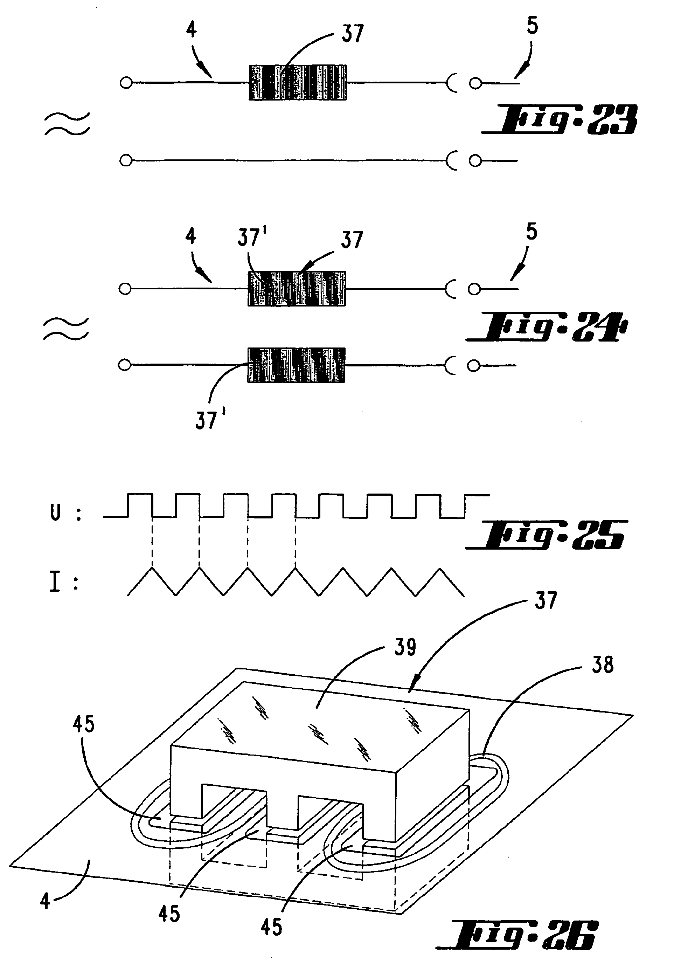

Erfindungsgemäß ist das Vorschaltelement 37 als Eigenschaft des magnetischen Steckkontaktes integriert (Fig. 23). Der magnetische Steckkontakt kann auch wie in Figur 16 dargestellt ausgebildet sein. In dieser Version besteht er nicht aus einem teilbaren Trafo, der nach dem Schließen einen kleineren Luftspalt hat, als im offenen Zustand. Der magnetische Steckkontakt besteht dann aus einem Trafo mit konstantem Luftspalt. In diesen Spalt wird als Teil der Modulplatine 5 eine Sekundärwicklung in Form einer Planarspule beim Einstecken des Moduls eingeschoben. Anders als in Figur 16 dargestellt, handelt es sich dann bei der Planarspule 41 nicht um eine kurzgeschlossene Spule, sondern um die Sekundärspule 19. Anstelle der parallel zur Primärwicklung geschalteten Drosseln bzw. Induktivitäten können aber auch Kondensatoren als Blindwiderstände zur Strombegrenzung parallelgeschaltet werden.

Das in der Figur 23 dargestellte Ausführungsbeispiel zeigt schematisch eine Weiterbildung einer Spannungsversorgung für ein Modul. In die Versorgungsspannungsleitung auf dem Modul träger 4 sind für jeden Steckplatz eines Moduls 5 Ableitungen geschaltet zur Spannungsversorgung des jeweiligen Moduls 5. Die Leistung wird über elektrische Kontakte dem Modul 5 zugeführt, wobei diese elektrische Kontakte beim Abziehen des Moduls gelöst werden. Um eine Funkenbildung beim Abziehen der Modul-Steckkarte 5 zu vermeiden, ist individuell vor den Steckkontakt eine Drossel 37 geschaltet. Danach kann die Drossel sowohl in eine der beiden Versorgungsleistungen, als auch in beide Versorgungsleitungen geschaltet sein (Fig. 24). Die Versorgungsspannung ist im Ausführungsbeispiel eine Rechteckspannung, so daß der durch die Drossel fließende Strom eine Dreiecksform besitzt (Fig. 16).

Die Fig. 26 zeigt ein Ausführungsbeispiel einer derartigen Drossel 37. Die Drossel besitzt einen aus zwei E-förmigen Kernhälften 39 bestehenden Kern. Die beiden mittleren Kern-Schenkel liegen auf Abstand zueinander und bilden einen Luftspalt. Die beiden äußeren Kern-schenkel berühren sich. Alle drei Kernschenkel ragen durch Öffnungen 45 der Platine des Modulträgers. Nur um die äußeren Schenkel des Kernes 39 sind die Spulenwicklungen 38 der Drossel gelegt. Die Spule 38 ist eine Planarspule und wird von zwei mit Abstand zueinanderliegenden Leiterbahnen ausgebildet.

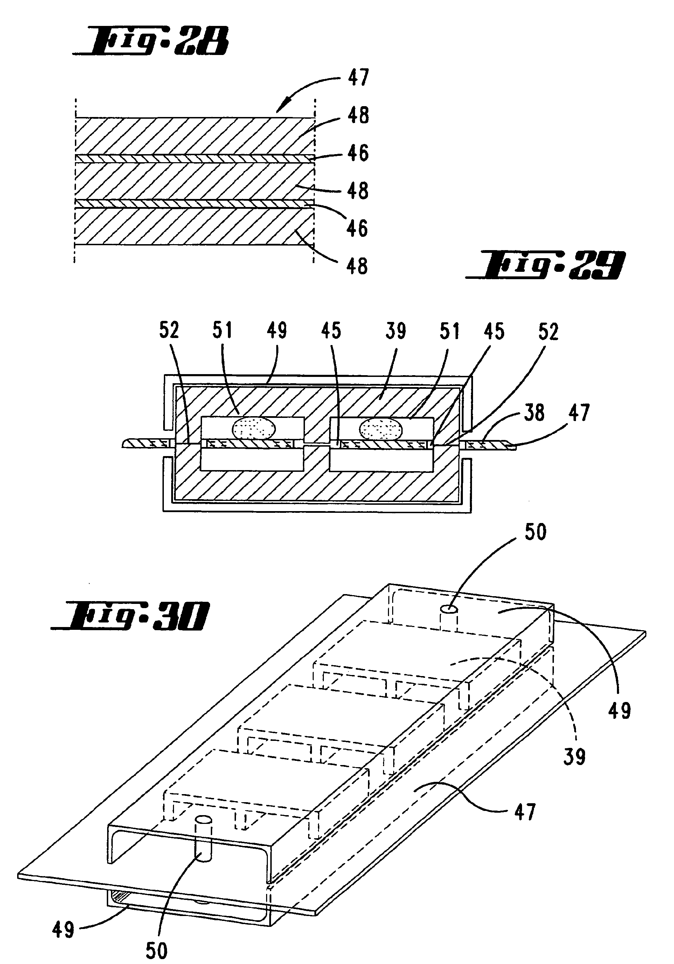

Die Leiterplatte 47 besitzt dabei insgesamt drei Isolierschichten 48 (Fig. 28). Diese bilden zwei äußere Isolierschichten aus, mit einer Stärke von jeweils 1 mm und eine mittlere Isolierschicht mit einer Stärke von 1/2 mm. Zwischen diesen Isolierschichten die aus Epoxyd bestehen befinden sich die Leiterbahnen 46.

Bei der Montage werden die ersten Kernhälften 39 mittels Kleber 51 auf die Platine derart geklebt, daß die Schenkel der Kernhälften durch die Öffnungen 45 der Platine hindurchragen (Fig. 29). Sodann werden die rückwärtigen Kernhälften 39 gegen die Stirnflächen 52 der äußeren Schenkel geklebt. Eine Fixage erfolgt durch eine U-förmige Leiste 49, die über eine Vielzahl von reihenförmig hintereinanderliegende Kerne 39 gelegt wird. Jeweils auf einer Seite der Platine 47 liegt eine derartige U-förmige Leiste 49. An ihren beiden Enden sind die Leisten 49 mittels Befestigungsstifte 50 miteinander verbunden, wobei die Befestigungsstifte durch die Platine hindurchragen (Fig. 30).

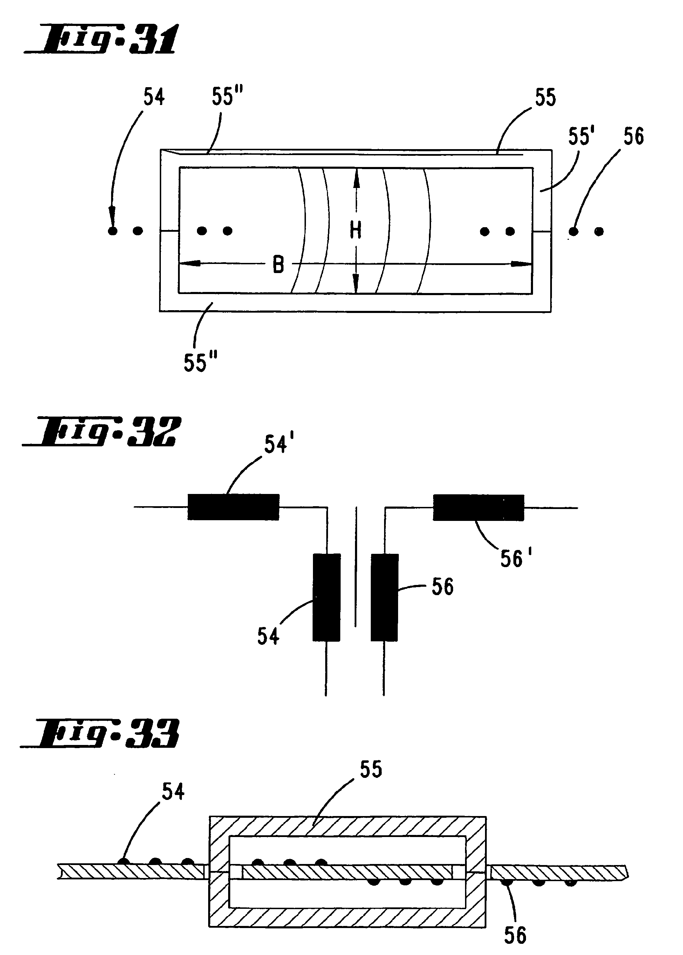

Die Fig. 31 zeigt schematisch einen Übertrager, welcher bspw. auf einer Platine des Moduls 5 oder des Modulträgers 4 oder auch des Netzteiles montiert werden kann. Auch hier ist, wie in der Fig. 33 dargestellt, der Träger des Kernes 55 des Übertragers die Platine selbst. Die Primärspule 54 und die Sekundärspule 56 werden auch hier wieder von Leiterbahnen der Platine ausgebildet. Dieser Übertrager hat nicht nur die Funktion, die Sekundärseite galvanisch von der Primärseite zu trennen oder die Primärspannung auf eine Sekundärspannung zu transformieren. Dieser Übertrager hat auch die Funktion einer sekundär- oder primärseitigen Drossel. Vorzugsweise wird dieser Übertrager in der in Fig. 17 oder auch in Fig. 18 dargestellten Weise auf einem Modul 5 verwendet. Der Übertrager dient zur Spannungsversorgung des Moduls. Der Kern, welcher aus zwei Kernhälften zusammengesetzt ist, hat eine im wesentlichen rechteckige Ring-Form, wobei die Schmalschenkel 55' des Kernes 55 der Primärwicklung 54 bzw. der Sekundärwicklung 56 zugeordnet sind. Die Längsschenkel 55'' verbinden die beiden den Wicklungen 55, 56 zugeordneten Schenkel 55'. Die Breite B, d.h. der Abstand zwischen den beiden im Zentrum der Spulen 54, 56 liegenden Schenkel 55' ist bevorzugt größer, als die Höhe H, der Abstand der beiden anderen Schenkel 55''. Diese Form des Übertragerkerns und der Spulenanordnung hat zur Folge, daß die im Ersatzschaltbild mit 54' und 56' dargestellten parasitären Induktivitäten relativ groß werden und so die Wirkung einer Drossel haben.

Die Fig. 33 stellt ein Ausführungsbeispiel dar, bei dem die als Planarspulen ausgebildeten Primärspule 54 und Sekundärspule 56 einander nicht überlappen. Möglich, aber derzeit nicht bevorzugt ist auch eine Überlappung der Primärspule 54 mit der Sekundärspule 56. Die Streuinduktivität kann in einem Bereich zwischen 4 und 10 % der Gesamtinduktivität liegen. Bevorzugt wird eine Streuinduktivität von 4%. Sie kann aber auch größer sein als 10%.

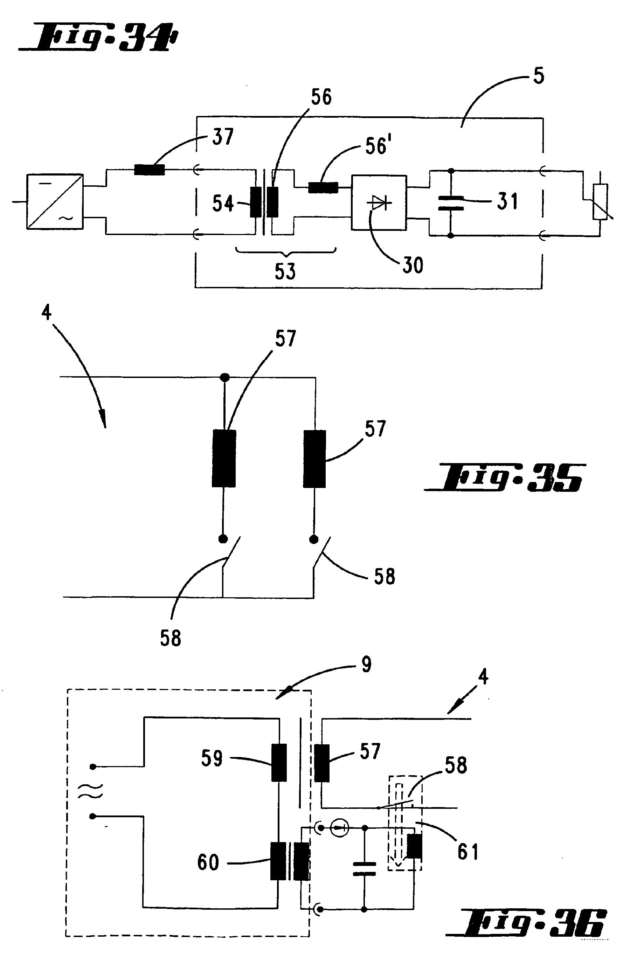

In der Fig. 34 ist eine Schaltung dargestellt, in welcher eine 300 kHz Rechteckspannung über eine Drossel 37 und daran sich anschließenden Steckkontakten auf ein Modul 5 übertragen wird. Die Steckkontakte führen zur Primärseite eines Übertragers, wie er in der Fig. 33 dargestellt ist. Die dort mit 56' dargestellte Drosselinduktivität ist eine parasitäre Induktivität und wird hervorgerufen durch den magnetischen Nebenschluß des aus den Wicklungen 54 und 56 bestehenden Übertragers. An die so leistungsbegrenzte Sekundärwicklung 56 ist ein Gleichrichter 30 angeschlossen mit einem Siebkondensator 31 zur Bereitstellung einer Ausgangs-Gleichspannung, welche an den Ausgangsklemmen anliegt.

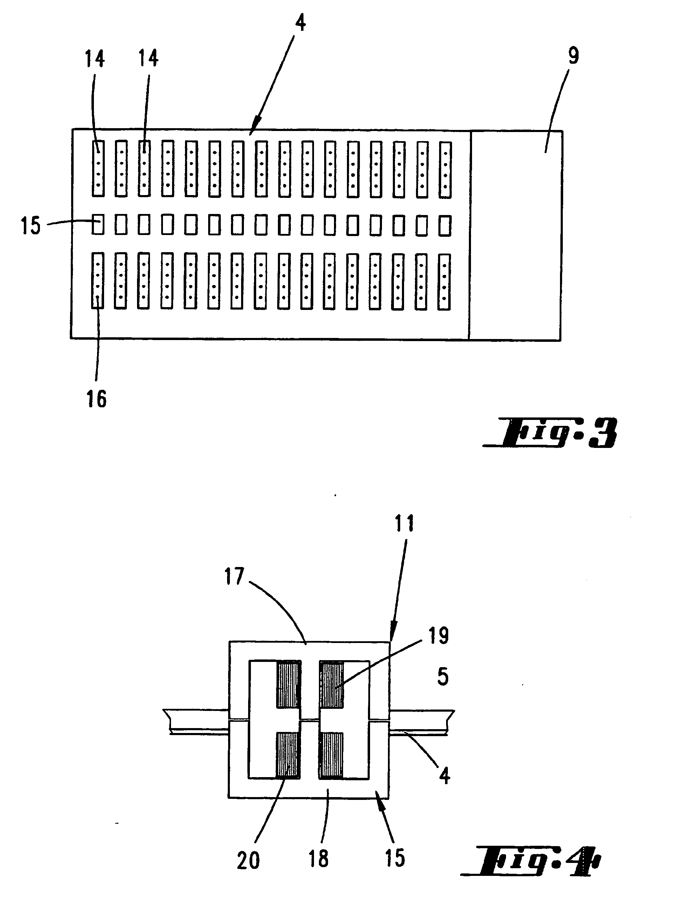

Die Spannungsversorgung des Modulträgers 4 erfolgt bevorzugt durch zwei redundante Netzteile 9 (Fig. 34). Jedes Netzteil 9 kann als Steckkarte ausgebildet sein und ist demzufolge auswechselbar. Die Redundanz der beiden Netzteile 9 hat zur Folge, daß ein Austausch der Netzteile während des Betriebes erfolgen kann. Auch der Austausch der Netzkarten soll funkenfrei erfolgen. Zu diesem Zwecke erfolgt die Leistungsübertragung von der Netzkarte 9 auf den Modulträger 4 ebenfalls im Wege eines getrennten Übertragers, dessen Primärwicklung 59 auf der Netzkarte 9 sitzt und dessen Sekundärwicklung 57 auf dem Modulträger 4 sitzt. Zur Ausgestaltung eines derartigen Transformators wird auf die Figur 4 und die zugehörige Beschreibung verwiesen.

Auf dem Modul träger 4 sind die beiden Sekundärwicklungen 57 parallel zueinander geschaltet jedoch jeweils unter Zwischenschaltung eines Schalters 58 (Fig. 35). Dieser Schalter 58 wird nur dann geschlossen, wenn in der Sekundärspule 57 eine Spannung induziert wird oder wenn die Netzkarte 9 eingesteckt ist und die Primärspule 59 bestromt wird'. Bei dem in der Fig. 36 dargestellten Schaltungsbeispiel sitzt auf dem Netzteil 9 in Reihe geschaltet zur Primärspule 59 die Primärspule eines Hilfstransformators 60. Die Anschlüsse der Sekundärspule dieses Hilfstransformators 60 werden über leitende Steckverbindungen auf einen Gleichrichter des Modulträgers übertragen. Hinter dem Gleichrichter sitzt ein Relais 61, welches den Schalter 58 betätigt. Der Hilfstransformator 60 ist so ausgebildet, daß er sehr wenig Leistung liefert, so daß beim Lösen der leitenden Kontakte zum Modulträger 4 keine Funken entstehen. Wird die Verbindung gelöst, so löst das Relais 61, der Schalter 58 öffnet und die Spule 57 ist offen. Auch der Hilfstransformator kann als trennbarer Transformator ausgebildet sein.

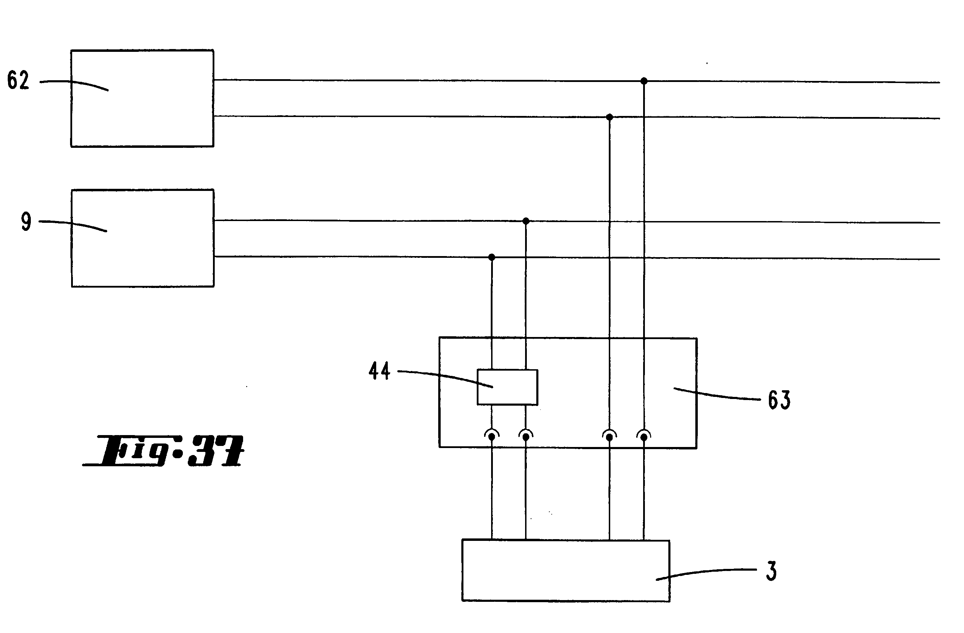

Die Fig. 37 zeigt eine Auswerteeinheit 62, von welcher Datenleitungen in Form eines Bus abgehen. Auf diese Datenleitungen greift ein oder mehrere Anschlußterminale 63 zu, welche im explosionsgeschützten Bereich liegen. Parallel zum Datenbus verläuft eine Energieversorgungsleitung, die durch ein Netzgerät 9 gespeist wird. Das Anschlußterminal 63 greift von dieser Energieversorgungsleitung die Betriebsspannung ab. Die ausgekoppelte Energie wird über eine Drossel 44 geleitet. So daß aus dem Anschlußterminal 63 eine gedrosselte Wechselspannung ausgekoppelt werden kann. Diese liegt an einer Steckleiste, auf welche ein Stecker eines Feldgerätes 3 aufgesteckt werden kann.

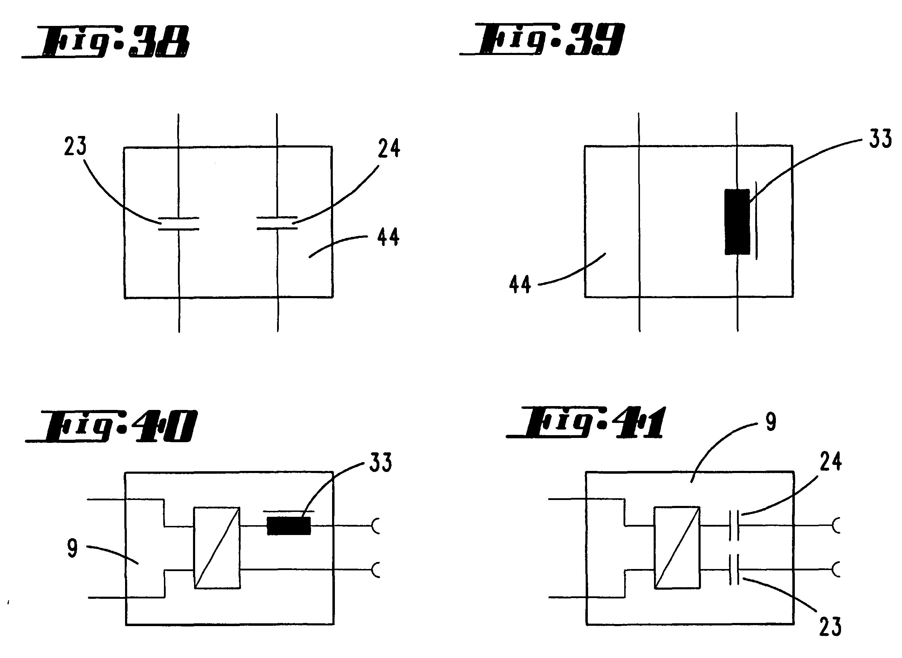

Die Ausgestaltung der in Fig. 37 dargestellten Drossel 44 zeigen die Figuren 38 und 39. Bei der in Fig. 38 dargestellten Drossel 44 handelt es sich um eine kapazitive Drossel. In die beiden Betriebsspannungsversorgungsleitungen sind jeweils Kondensatoren 23 bzw. 24 geschaltet. Die Kondensatoren können einen derartigen Wert aufweisen, daß der Blindwiderstand zwischen 50 und 1000 Ohm liegt. Als Kondensatoren kommen bspw. Kapazitäten zwischen 1 nF und 10 nF in Betracht bei einer Wechselspannung zwischen 200 kHz und 300 kHz.

Die in Fig. 39 dargestellte Drossel 44 besitzt eine Spule 33. Hier kann aber auch alternativ vorgesehen sein, daß parallel zur Spule 33 eine weitere Spule 33 in die andere Betriebsspannungsleitung eingeschaltet ist. Die Induktivitäten der Spulen liegen vorzugsweise zwischen 1 und 10 µH. Ein Blindwiderstand kann hier zwischen 1 und 20 Ohm betragen.

Die Versorgungsspannung liegt vorzugsweise zwischen 20 und 30 Volt.

In der Fig. 40 ist ein erfindungsgemäßes Netzgerät dargestellt, wie es zur Versorgung einer explosionsgeschützten Funktionseinheit dient. Die Energieauskopplung erfolgt hier über die Spule 33.

Bei dem in Fig. 41 dargestellten Fall erfolgt die Energieauskopplung durch die beiden Kondensatoren 23 und 24.

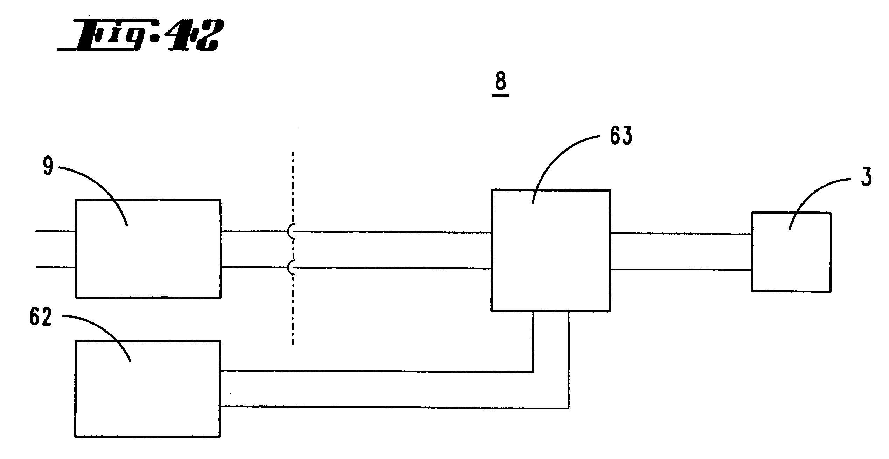

Das in Fig. 42 dargestellte Blockschaltbild zeigt ein Netzteil gemäß den Figuren 40 oder 41, wie es mit einem Anschlußterminal 63 verbunden ist. Das Anschlußterminal 63 ist leitungsverbunden mit einem Feldgerät 3 und versorgt das Feldgerät 3 mit der vom Netzgerät 9 bereitgestellten Betriebsspannung bzw. sorgt für einen Datenaustausch zwischen dem Feldgerät 3 und einer Auswerteeinheit 62. Das Netzteil 9 kann außerhalb des explosionsgeschützten Bereiches 8 liegen.

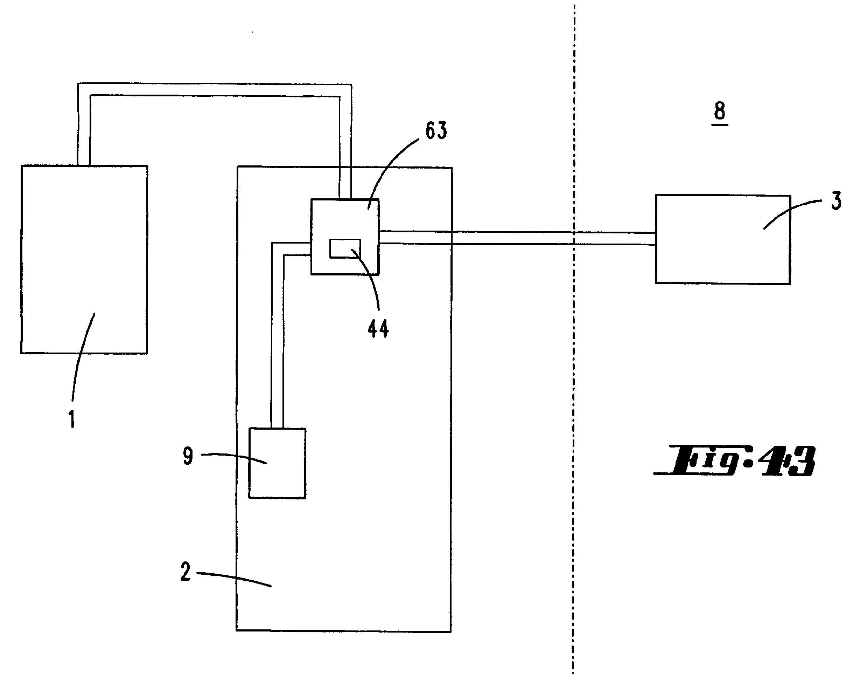

Bei dem in Fig. 43 dargestellten Schaltungsbeispiel befindet sich ein Schaltkasten 2 zusammen mit einem Leitrechner 1 außerhalb des explosionsgeschützen Bereiches 8. Im Schaltkasten 2 befinden sich eine Vielzahl von Anschlußterminalen 63. Der Übersichtlichkeit halber ist lediglich ein Anschlußterminal 63 dargestellt. Die Anschlußterminale können auf jeweils einer gesonderten Platine aufgebaut sein. Es ist aber auch möglich, daß die Anschlußterminale 63 auf einer gemeinsamen Platine sitzen. Dem Anschlußterminal 63 ist eine Drossel 44 zugeordnet, wie sie die Figuren 38 bzw. 39 zeigen.

Die Drossel 44 wird von einem Netzteil 9 energieversorgt. Die zufolge der Drossel 44 gedrosselte Energie wird zu einem Feldgerät 3 ausgekoppelt. Das Feldgerät 3 liegt im explosionsgeschützten Bereich.

## Patentansprüche

1. Vorrichtung zur Energieversorgung mit einem Netzteil (9), einer Vielzahl von jeweils ein Modul (5) darstellenden explosionsgeschützter Funktionseinheiten und einem Modulträger (4), wobei der Modulträger (4) eine Vielzahl von Steckverbindungen (14, 15, 16) aufweist, auf welche jeweils ein als Steckerelement ausgebildetes Modul (5) steckbar und funkenfrei oder im Wesentlichen funkenfrei wieder anziehbar ist, wobei die vom Netzteil (9) gelieferte Betriebsspannung vom Netzteil (9) auf den Modulträger (4) und vom Modulträger (4) auf die Module übertragen wird; **dadurch gekennzeichnet, dass** die Betriebsspannung eine Wechselspannung ist und die Energieauskopplung aus dem Modulträger (4) in die Module (5) induktiv (33, 44, 53) oder kapazitiv (23, 24, 19) gedrosselt ist, wobei jedem Modul (5) individuell eine Leistungsbegrenzung in Form eines Blindwiderstandes im Wechselstromkreis zugeordnet ist.

2. Vorrichtung nach Anspruch 1, **dadurch gekennzeichnet, dass** der Blindwiderstand zwischen 1 und 1.000 Ohm beträgt.

3. Vorrichtung nach einem der vorhergehenden Ansprüche, **dadurch gekennzeichnet, dass** die Betriebsspannung eine Frequenz zwischen 200 und 300 kHz ist.

4. Vorrichtung nach einem der vorhergehenden Ansprüche, **dadurch gekennzeichnet, dass** eine Auskopplungsinduktivität einen Wert zwischen 1 und 10 µH hat.

5. Vorrichtung nach einem der vorhergehenden Ansprüche, **dadurch gekennzeichnet, dass** eine Auskopplungskapazität einen Wert zwischen 1 und 10 nF hat.

6. Vorrichtung nach einem der vorhergehenden Ansprüche, **gekennzeichnet durch** in je eine der beiden Energieversorgungsleitungen eingeschaltete Drosselglieder in Form einer Spule oder eines Kondensators.

7. Vorrichtung nach einem der vorhergehenden Ansprüche, **dadurch gekennzeichnet, dass** Modul (5) und Träger (4) oder Netzteil (9) und Träger (4) jeweils einen Teil (11, 15) eines trennbaren induktiven Übertragers aufweisen.

8. Vorrichtung nach Anspruch 7, **dadurch gekennzeichnet, dass** die dem Träger (4) zugeordneten Teile (15) der Übertrager entweder stromgeregelt in Serie oder individuell vorgeschaltet parallel geschaltet sind.

9. Vorrichtung nach Anspruch 8, **dadurch gekennzeichnet, dass** ein jeder in Reihe geschalteten Spule (20) eines Übertragerteiles (15) vorgeschaltetes Element (37) durch das Einstecken der Funktionseinheit (5) wirkungsbeeinflusst wird.

10. Vorrichtung nach Anspruch 7, **dadurch gekennzeichnet, dass** die elektrisch parallel geschalteten Spulen (20) mit einem Magnet-Schalter (Reedkontakt) vorbeschaltet sind, der beim Einstecken der zugeordneten Funktionseinheit schließt.

11. Vorrichtung nach Anspruch 9 oder 10, **dadurch gekennzeichnet, dass** den Spulen (20) jeweils eine Drossel vorgeschaltet ist.

12. Vorrichtung nach Anspruch 8, **dadurch gekennzeichnet, dass** ein Kern (39) der Drossel (33, 37, 44) aus einem von einem Magnetfeld in die Sättigung treibbaren Material gebildet ist und die Funktionseinheit (5) einen Magneten (40) trägt.

13. Vorrichtung nach einem der vorhergehenden Ansprüche, **dadurch gekennzeichnet dass** ein Kern (39) der Drossel (33, 37, 44) einen Spalt aufweist zum Einstecken einen kurzgeschlossenen Spule (41) der Funktionseinheit (5).

14. Vorrichtung nach einem der vorhergehenden Ansprüche, **dadurch gekennzeichnet dass** die Spule (41) als Planarspule ausgebildet ist.

15. Vorrichtung nach einem der vorhergehenden Ansprüche, **gekennzeichnet durch** eine aus zwei Netzteilen (9) bestehende Betriebsspannungsquelle, wobei jedes Netzteil einen Primärspule jedes dem Modulträger zugeordneten Übertragerteiles speist.

16. Vorrichtung nach Anspruch 15, **dadurch gekennzeichnet, dass** die Netzteile (9) leistungsgesteuert sind, wobei die Leistungssteuerung über die Phasenlage der beiden Wechselspannungen erfolgt.

17. Vorrichtung nach Anspruch 15, **dadurch gekennzeichnet, dass** die Netzteile (9) leistungsgesteuert sind, wobei die Leistungssteuerung über die Addition oder die Subtraktion von Amplituden der beiden Wechselspannungen erfolg.

18. Vorrichtung nach einem der Ansprüche 7 bis 17, **dadurch gekennzeichnet, dass** der eine Übertragerteil eine Wicklung und einen Kern im Spalt aufweist und der andere Übertragerteil eine in den Spalt einschiebbare Spule.

19. Vorrichtung nach einem der Ansprüche 7 bis 18, **dadurch gekennzeichnet, dass** die Betriebsspannungsverbindung (11, 15) von einem trennbaren, induktiven Übertrager ausgebildet ist.

20. Vorrichtung nach einem der Ansprüche 7 bis 19, **dadurch gekennzeichnet, dass** der trennbare Übeztrager eine erste, fest mit dem Modulträger (4) verbundene, eine Primärwicklung (20) aufnehmende Kernhälfte (18) und eine zweite, fest mit dem Modul (5) verbundene, eine Sekundärwicklung (19) aufweisende Kernhälfte (17) aufweist.

21. Vorrichtung nach Anspruch 20, **dadurch gekennzeichnet, dass** die Primärwicklung aus zwei Halbwicklungen (20') besteht, wobei die Halbwicklung (20') jeder der reihenförmig nebeneinanderliegenden Primärkernhälften (18) einzeln in Reihe geschaltet sind und die Halbwicklungen (20') der letzten Primärkernhälfte (18) der Reihe miteinander verbunden sind.

22. Vorrichtung nach einem der Ansprüche 20 oder 21, **dadurch gekennzeichnet, dass** die Sekundärwicklungen eine Vielzahl von galvanisch getrennten Einzelwicklungen (19') ausbildet.

23. Vorrichtung nach einem der Ansprüche 20 bis 22, **dadurch gekennzeichnet dass** die Primärspannung ca.1 Volt beträgt und die Sekundärspannung etwa 30 Volt beträgt.

24. Vorrichtung nach einem der vorhergehenden Ansprüche, **dadurch gekennzeichnet, dass** die Wechselspannung eine Hochfrequenzspannung von vorzugsweise zwischen 200 und 300 kHz ist.

25. Vorrichtung nach einem der vorhergehenden Ansprüche, **dadurch gekennzeichnet, dass** der Blindwiderstand im Stromkreis der Sekundärwicklung (19) liegt.

26. Vorrichtung nach einem der vorhergehenden Ansprüche, **dadurch gekennzeichnet, dass** die Betriebswechselspannung aus einer Gleiehspattnung gewonnen wird.

27. Vorrichtung nach einem der vorhergehenden Ansprüche, **dadurch gekennzeichnet, dass** beide Spannungsversorgungsleitungen je einen Kondensator (23, 24) oder eine Drossel (44) zur Leistungsbegrenzung aufweisen.

28. Vorrichtung nach einem der vorhergehenden Ansprüche, **dadurch gekennzeichnet, dass** die Module (5) elektrische Schaltungsträger sind.

29. Vorrichtung nach einem der vorhergehenden Ansprüche **dadurch gekennzeichnet, dass** die Betriebsspannung auf den Modulen gleichgerichtet wird.

30. Vorrichtung nach einem der vorhergehenden Ansprüche, **dadurch gekennzeichnet, dass** die Betriebsspannungsverbindung zwischen dem die Betriebsspannung bereitstellenden Netzteil (9) und dem Modul (5) über elektrisch leitende, trennbare Kontakte erfolgt und den netzteilseitigen Kontakten eine Drossel (37) vorgeschaltet ist.

31. Vorrichtung nach Anspruch 30, **dadurch gekennzeichnet, dass** die jeweils einem Modulsteckplatz zugeordneten Drosseln (37) auf der Modulträger-platine sitzen und als Planarspulen ausgebildet sind.

32. Vorrichtung nach Anspruch 31, **dadurch gekennzeichnet, dass** die Spule (38) von einer vollisolierten Leiterbahn einer mehrlagigen Platine ausgebildet ist.

33. Vorrichtung nach Anspruch 31, **dadurch gekennzeichnet, dass** die jeweilige Spule (38) im Wesentlichen nur den beiden äußeren Schenkeln eines insbesondere E-förmigen Spulenkerns (39) zugeordnet ist, welche Schenkel Öffnungen (45) der Platine durchgreifen, wobei die in einer Reihe angeordneten Spulenkerne (39) von einer U-förmigen Leiste (49) überfangen und gehalten werden.

34. Vorrichtung nach Anspruch 33, **dadurch gekennzeichnet, dass** eine der beiden Kernhälften des Kernes (39) mit der Platine kleberverbunden (51) und beide Kerne von jeweils einer Leiste (49) gehalten sind, welche durch ein die Platine durchdringendes Verbindungselement (50) miteinander verbunden sind.

35. Vorrichtung nach einem der vorhergehenden Ansprüche, **dadurch gekennzeichnet, dass** die Parameter der Drossel (37) beispielsweise Kernwerkstoff, Spulendurchmesser und Windungszahl so gewählt sind, dass die Permeabilität über die gesamte Aussteuerung der Betriebsspannungsversorgung im Wesentlichen temperaturkonstant ist.

36. Vorrichtung nach einem der vorhergehenden Ansprüche, **dadurch gekennzeichnet, dass** die Wirkung der zur Leistungsbegrenzung dienenden Drossel (53) von einem Übertrager (54, 56, 56') mit einem magnetischen Nebenfluss erbracht ist.

37. Vorrichtung nach Anspruch 36, **dadurch gekennzeichnet, dass** die Streuinduktivität des Übertragers (53) mindestens 4 bis 10% der Gesamtinduktivität beträgt.

38. Vorrichtung nach einem der vorhergehenden Ansprüche, **dadurch gekennzeichnet, dass** der Kern (55) des Übertragers (53) aus zwei langgestreckten U-Kernhälften besteht.

39. Vorrichtung nach Anspruch 38, **dadurch gekennzeichnet, dass** die die beiden räumlich getrennten Wicklungen (54 und 56) aufweisenden Kernschenkel (55') weiter voneinander beabstandet sind, als die diese Schenkel (55') miteinander verbindenden Schenkel (55") des im Wesentlichen rechteck-ringförmigen Kerns.

40. Vorrichtung nach Anspruch 39, **dadurch gekennzeichnet, dass** die Spulen (54 und 56) sich gegebenenfalls teilweise überlappende Planarspulen sind.

41. Vorrichtung nach einem der vorhergehenden Ansprüche, **dadurch gekennzeichnet, dass** die von zwei Netzteilen (9) gelieferte Betriebsspannung im Wege jeweils eines trennbaren Übertragers (59, 57) dem Träger (4) zugeführt wird, wobei die Sekundärspule (57) des Übertragers dem Träger (4) und die Primärspule (59) der Netzplatine zugeordnet ist, wobei die Sekundärspule (57) nur bei eingestecktem und Spannung lieferndem Netzteil in den Sekundärkreis geschaltet ist.

42. Vorrichtung nach einem der vorhergehenden Ansprüche, **gekennzeichnet durch** ein von einem Primärkreis des Netzteiles (9) geschalteten Hilfstransformator bestromten Relais (61) zum Schalten einer Sekundärspule (57) eines Übertragers (57, 59) des Netzteiles (9).

43. Vorrichtung nach einem der vorhergehenden Ansprüche, **dadurch gekennzeichnet, dass** mehrere Sekundärwicklungen (57) jeweils zugeordneter Netzteile (9) auf dem Träger (4) parallel geschaltet sind.

44. Vorrichtung nach einem der Ansprüche 1 bis 43, **dadurch gekennzeichnet, dass** die Sekundärwicklungen (57) jeweils zugeordneter Netzteile (9) auf dem Träger (4) in Reihe geschaltet sind.

45. Vorrichtung nach einem der vorhergehenden Ansprüche, **dadurch gekennzeichnet, dass** die Drossel (44) einem im explosionsgeschützten Bereich angeordneten Anschlussterminal für mindestens ein Feldgerät (3) zugeordnet ist.

46. Vorrichtung nach einem der Ansprüche 1 bis 44, **dadurch gekennzeichnet, dass** die Drossel (44) einem im nichtexplosiven Bereich angeordneten Schaltkasten (2) zugeordnet ist.

## Claims

1. Power supply apparatus with a power supply unit (9), a plurality of explosion-proof functional units each representing a module (5) and a module mounting (4), wherein the module mounting (4) has a plurality of plug connections (14, 15, 16), onto each of which a module (5) formed as a plug-in element is pluggable and unpluggable again in a spark-free or essentially spark-free manner, wherein the operating voltage supplied by the power supply unit (9) is transmitted from the power supply unit (9) to the module mounting (4) and from the module mounting (4) to the modules, **characterised in that** the operating voltage is an alternating voltage and the energy output coupling from the module mounting (4) to the modules (5) is choked inductively (33, 44, 53) or capacitively (23, 24, 19), wherein power limiting in the form of a reactive impedance in the alternating current circuit is assigned individually to each module (5).

2. Apparatus according to claim 1, **characterised in that** the reactive impedance is between 1 and 1000 Ohms.

3. Apparatus according to one of the preceding claims, **characterised in that** the operating voltage is a frequency between 200 and 300 kHz.

4. Apparatus according to any one of the preceding claims, **characterised in that** an output coupling inductance has a value between 1 and 10 µH.

5. Apparatus according to any one of the preceding claims, **characterised in that** an output coupling capacitance has a value between 1 and 10 nF.

6. Apparatus according to any one of the preceding claims, **characterised by** choke elements in the form of a coil or a capacitor inserted into each of the two energy supply lines.

7. Apparatus according to any one of the preceding claims, **characterised in that** module (5) and mounting (4) or power supply unit (9) and mounting (4) each have a part (11, 15) of a disconnectable inductive transformer.

8. Apparatus according to claim 7, **characterised in that** the parts (15) of the transformers assigned to the mounting (4) are either connected on a current-controlled basis in series or individually prewired in parallel.

9. Apparatus according to claim 8, **characterised in that** an element (37) connected upstream of each series-connected coil (20) of a transformer part (15) is influenced in its effect by the insertion of the functional unit (5).

10. Apparatus according to claim 7, **characterised in that** the coils (20) connected electrically in parallel are prewired with a magnetic switch (reed contact), which closes on insertion of the assigned functional unit.

11. Apparatus according to claim 9 or 10, **characterised in that** a choke is connected in each case upstream of the coils (20).

12. Apparatus according to claim 8, **characterised in that** a core (39) of the choke (33, 37, 44) is formed from a material that can be brought to saturation by a magnetic field and the functional unit (5) bears a magnet (40).

13. Apparatus according to any one of the preceding claims, **characterised in that** a core (39) of the choke (33, 37, 44) has a gap for inserting a short-circuited coil (41) of the functional unit (5).

14. Apparatus according to any one of the preceding claims, **characterised in that** the coil (41) is formed as a planar coil.

15. Apparatus according to any one of the preceding claims, **characterised by** an operating voltage source consisting of two power supply units (9), wherein each power supply unit supplies a primary coil of each transformer part assigned to the module mounting.

16. Apparatus according to claim 15, **characterised in that** the power supply units (9) are power-controlled, wherein the power control takes place by way of the phase angle of the two alternating voltages.

17. Apparatus according to claim 15, **characterised in that** the power supply units (9) are power-controlled, wherein the power control takes place by way of the addition or subtraction of amplitudes of the two alternating voltages.

18. Apparatus according to any one of claims 7 to 17, **characterised in that** one transformer part has a winding and a core in the gap and the other transformer part has a coil which can be inserted into the gap.

19. Apparatus according to any one of claims 7 to 18, **characterised in that** the operating voltage connection (11, 15) is formed by a disconnectable, inductive transformer.

20. Apparatus according to any one of claims 7 to 19, **characterised in that** the disconnectable transformer has a first core half (18) rigidly fixed to the module mounting (4) and accommodating a primary winding (20) and a second core half (17) rigidly fixed to the module (5) and having a secondary winding (19).

21. Apparatus according to claim 20, **characterised in that** the primary winding consists of two half-windings (20'), wherein the half-windings (20') of each of the primary core halves (18) lying adjacent to one another in a row are connected individually in series and the half-windings (20') of the last primary core half (18) of the row are connected to one another.

22. Apparatus according to any one of claims 20 or 21, **characterised in that** the secondary winding forms a plurality of electrically isolated individual windings (19').

23. Apparatus according to any one of claims 20 to 22, **characterised in that** the primary voltage is approx. 1 volt and the secondary voltage is roughly 30 volts.

24. Apparatus according to any one of the preceding claims, **characterised in that** the alternating voltage is a high-frequency voltage of preferably between 200 and 300 kHz.

25. Apparatus according to any one of the preceding claims, **characterised in that** the reactive impedance lies in the circuit of the secondary winding (19).

26. Apparatus according to any one of the preceding claims, **characterised in that** the operating alternating voltage is obtained from a direct voltage.

27. Apparatus according to any one of the preceding claims, **characterised in that** both voltage supply lines each have a capacitor (23, 24) or a choke (44) for power limiting.

28. Apparatus according to any one of the preceding claims, **characterised in that** the modules (5) are electric substrates.

29. Apparatus according to any one of the preceding claims, **characterised in that** the operating voltage on the modules is rectified.

30. Apparatus according to any one of the preceding claims, **characterised in that** the operating voltage connection between the power supply unit (9) supplying the operating voltage and the module (5) is effected via electrically conductive, disconnectable contacts and a choke (37) is connected upstream of the contacts on the power supply unit side.

31. Apparatus according to claim 30, **characterised in that** the chokes (37) each assigned to a module location sit on the module mounting circuit board and are formed as planar coils.

32. Apparatus according to claim 31, **characterised in that** the coil (38) is formed by a fully insulated conductor path of a multilayer circuit board.

33. Apparatus according to claim 31, **characterised in that** the respective coil (38) is assigned essentially only to the two outer sides of a coil core (39) formed in particular to be E-shaped, which sides penetrate openings (45) in the board, wherein the coil cores (39) arranged in a row are overlaid and held by a U-shaped strip (49).

34. Apparatus according to claim 33, **characterised in that** one of the two core halves of the core (39) is adhesively bonded (51) to the circuit board and both cores are each held by a strip (49), which strips are connected to one another by a connecting element (50) penetrating the circuit board.

35. Apparatus according to any one of the preceding claims, **characterised in that** the parameters of the choke (37), for example core material, coil diameter and number of turns, are selected such that the permeability is essentially temperature-constant over the entire control range of the operating voltage supply.

36. Apparatus according to any one of the preceding claims, **characterised in that** the effect of the choke (53) serving to limit the power is provided by a transformer (54, 56, 56') with a collateral magnetic flux.

37. Apparatus according to claim 36, **characterised in that** the leakage inductance of the transformer (53) is at least 4 to 10% of the total inductance.

38. Apparatus according to any one of the preceding claims, **characterised in that** the core (55) of the transformer (53) consists of two elongated U-shaped core halves.

39. Apparatus according to claim 38, **characterised in that** the core sides (55') having the two spatially separated windings (54 and 56) are spaced further apart from one another than the sides (55") of the essentially rectangular-annular core that connect these sides (55') to one another.

40. Apparatus according to claim 39, **characterised in that** the coils (54 and 56) optionally are partially overlapping planar coils.

41. Apparatus according to any one of the preceding claims, **characterised in that** the operating voltage supplied by two power supply units (9) is supplied to the mounting (4) by way of a disconnectable transformer (59, 57) in each case, wherein the secondary coil (57) of the transformer is assigned to the mounting (4) and the primary coil (59) to the power circuit board, wherein the secondary coil (57) is only connected to the secondary circuit when a power supply unit is plugged in and supplying voltage.

42. Apparatus according to any one of the preceding claims, **characterised by** a relay (61) powered by an auxiliary transformer connected in the primary circuit of the power supply unit (9) for switching a secondary coil (57) of a transformer (57, 59) of the power supply unit (9).

43. Apparatus according to any one of the preceding claims, **characterised in that** several secondary windings (57) of respectively assigned power supply units (9) are connected in parallel on the mounting (4).

44. Apparatus according to any one of claims 1 to 43, **characterised in that** the secondary windings (57) of respectively assigned power supply units (9) are connected in series on the mounting (4).

45. Apparatus according to any one of the preceding claims, **characterised in that** the choke (44) is assigned to a connection terminal arranged in the explosion-proof area for at least one field device (3).

46. Apparatus according to any one of claims 1 to 44, **characterised in that** the choke (44) is assigned to a switch box (2) arranged in the non-explosive area.

## Revendications

1. Dispositif d'alimentation en énergie électrique, avec un bloc d'alimentation (9), une pluralité d'unités fonctionnelles antidéflagrantes constituant chacune un module (5) et un support de modules (4), ledit support de modules (4) présentant une pluralité de connecteurs (14, 15, 16) sur chacun desquels un module (5) réalisé sous la forme d'un élément enfichable peut être inséré et ensuite retiré sans étincelles ou pratiquement sans étincelles, la tension de service fournie par le bloc d'alimentation (9) étant transmise du bloc d'alimentation (9) au support de modules (4) et du support de modules (4) aux modules, **caractérisé en ce que** la tension de service est une tension alternative et **en ce que** le découplage de l'énergie entre le support de modules (4) et les modules (5) est amorti de manière inductive (33, 44, 53) ou capacitive (23, 24, 19), une limitation de puissance étant affectée individuellement à chaque module (5) sous la forme d'une réactance dans le circuit alternatif.

2. Dispositif selon la revendication 1, **caractérisé en ce que** la réactance a une valeur dans la plage de 1 à 1000 ohms.

3. Dispositif selon l'une des revendications précédentes, **caractérisé en ce que** la tension de service a une fréquence dans la plage de 200 à 300 kHz.

4. Dispositif selon l'une des revendications précédentes, **caractérisé en ce qu'**une inductance de découplage a une valeur dans la plage de 1 à 10 µH.

5. Dispositif selon l'une des revendications précédentes, **caractérisé en ce qu'**une capacité de découplage a une valeur dans la plage de 1 à 10 nF.

6. Dispositif selon l'une des revendications précédentes, **caractérisé par** des éléments d'amortissement insérés dans l'une des deux lignes d'alimentation en énergie sous la forme d'une self ou d'un condensateur.

7. Dispositif selon l'une des revendications précédentes, **caractérisé en ce que** le module (5) et le support (4) ou le bloc d'alimentation (9) et le support (4) présentent chacun une partie (11, 15) d'un transmetteur inductif séparable.

8. Dispositif selon la revendication 7, **caractérisé en ce que** les parties (15) des transmetteurs affectées au support (4) sont soit régulées en courant en série, soit précâblées en parallèle individuellement.

9. Dispositif selon la revendication 8, **caractérisé en ce qu'**un élément (37) placé en amont de chaque self (20) en série d'une partie de transmetteur (15) est activé par l'insertion de l'unité fonctionnelle (5).

10. Dispositif selon la revendication 7, **caractérisé en ce que** les selfs (20) électriquement reliées en parallèle sont précédées d'un interrupteur magnétique (contact reed) qui se ferme lors de l'insertion de l'unité fonctionnelle concernée.

11. Dispositif selon la revendication 9 ou 10, **caractérisé en ce qu'**une inductance est câblée en amont de chaque self (20).

12. Dispositif selon la revendication 8, **caractérisé en ce qu'**un noyau (39) de l'inductance (33, 37, 44) est constitué d'un matériau qui peut être amené à saturation par un champ magnétique et **en ce que** l'unité fonctionnelle (5) porte un aimant (40).

13. Dispositif selon l'une des revendications précédentes, **caractérisé en ce qu'**un noyau (39) de l'inductance (33, 37, 44) présente un entrefer destiné à déconnecter une self (41) en court circuit de l'unité fonctionnelle (5).

14. Dispositif selon l'une des revendications précédentes, **caractérisé en ce que** la self (41) est réalisée sous la forme d'une bobine plane.

15. Dispositif selon l'une des revendications précédentes, **caractérisé par** une source de tension de service constituée de deux blocs d'alimentation (9), chaque bloc d'alimentation alimentant une bobine primaire de chaque partie de transmetteur affectée au support de modules.

16. Dispositif selon la revendication 15, **caractérisé en ce que** les blocs d'alimentation (9) sont commandés en puissance, la régulation de puissance se faisant par le biais de la position de phase des deux tensions alternatives.

17. Dispositif selon la revendication 15, **caractérisé en ce que** les blocs d'alimentation (9) sont commandés en puissance, la régulation de puissance se faisant par addition ou soustraction des amplitudes des deux tensions alternatives.

18. Dispositif selon l'une des revendications 7 à 17, **caractérisé en ce que** l'une des parties de transmetteur présente un enroulement et un noyau dans l'entrefer et l'autre partie de transmetteur une self qui peut être introduite dans l'entrefer.

19. Dispositif selon l'une des revendications 7 à 18, **caractérisé en ce que** la connexion de la tension de service (11, 15) est assurée par un transmetteur inductif séparable.

20. Dispositif selon l'une des revendications 7 à 19, **caractérisé en ce que** le transmetteur séparable présente un premier demi-noyau solidaire du support de modules (4) et recevant (18) un enroulement primaire (20), et un deuxième demi-noyau (17) solidaire du module (5) et présentant un enroulement secondaire (19).

21. Dispositif selon la revendication 20, **caractérisé en ce que** l'enroulement primaire se compose de deux demis enroulements (20'), les demis enroulements (20') de chacun des demis noyaux primaires (18) disposés dans une rangée les uns à côté des autres étant câblés individuellement en série et les demis enroulements (20') du dernier demi-noyau (18) de la rangée étant reliés l'un à l'autre.

22. Dispositif selon l'une des revendications 20 ou 21, **caractérisé en ce que** les enroulements secondaires sont formés par une pluralité d'enroulements individuels galvaniquement séparés (19').

23. Dispositif selon l'une des revendications 20 à 22, **caractérisé en ce que** la tension primaire est d'environ 1 volt et la tension secondaire d'environ 30 volts.

24. Dispositif selon l'une des revendications précédentes, **caractérisé en ce que** la tension alternative est une tension à haute fréquence, de préférence dans la plage de 200 à 300 kHz.

25. Dispositif selon l'une des revendications précédentes, **caractérisé en ce que** la réactance se trouve dans le circuit électrique de l'enroulement secondaire (19).

26. Dispositif selon l'une des revendications précédentes, **caractérisé en ce que** la tension de service alternative est obtenue à partir d'une tension continue.

27. Dispositif selon l'une des revendications précédentes, **caractérisé en ce que** les deux lignes d'alimentation en tension présentent chacune un condensateur (23, 24) ou une inductance (44) pour limiter la puissance.

28. Dispositif selon l'une des revendications précédentes, **caractérisé en ce que** les modules (5) sont des supports de connexions électriques.

29. Dispositif selon l'une des revendications précédentes, **caractérisé en ce que** la tension de service est redressée sur les modules.

30. Dispositif selon l'une des revendications précédentes, **caractérisé en ce que** le raccordement de la tension de service entre le bloc d'alimentation (9) qui fournit la tension de service et le module (5) se fait par le biais de contacts électriquement conducteurs séparables et **en ce qu'**une inductance (37) est câblée en amont des contacts côté bloc d'alimentation.

31. Dispositif selon la revendication 30, **caractérisé en ce que** les inductances (37) affectées à chaque emplacement de connexion de module se trouvent sur le circuit imprimé du support de modules et sont réalisées sous la forme de bobines planes.

32. Dispositif selon la revendication 31, **caractérisé en ce que** la self (38) est réalisée par une piste conductrice entière isolée d'un circuit imprimé multicouches.

33. Dispositif selon la revendication 31, **caractérisé en ce que** chaque self (38) est essentiellement affectée uniquement aux deux branches extérieures d'un noyau de self (39) notamment en forme de E, lesquelles branches passent dans des ouvertures (45) du circuit imprimé, les noyaux de self (39) disposés en ligne étant recouverts et maintenus par une barrette en forme de U (49).

34. Dispositif selon la revendication 33, **caractérisé en ce que** l'un des deux demis noyaux du noyau (39) est fixé par collage (51) au circuit imprimé et **en ce que** les deux noyaux sont maintenus chacun par des barrettes (49) qui sont reliées entre elles par un élément d'assemblage (50) qui traverse le circuit imprimé.

35. Dispositif selon l'une des revendications précédentes, **caractérisé en ce que** les paramètres de l'inductance (37), par exemple le matériau du noyau, le diamètre de la bobine et le nombre de spires, sont choisis tels que la perméabilité ne varie pratiquement pas avec la température sur l'ensemble de la plage de réglage de l'alimentation de tension de service.

36. Dispositif selon l'une des revendications précédentes, **caractérisé en ce que** l'effet de l'inductance (53) servant à limiter la puissance est assuré par un transmetteur (54, 56, 56') avec un flux magnétique secondaire.

37. Dispositif selon la revendication 36, **caractérisé en ce que** l'inductance de fuite du transmetteur (53) est au moins égale à 4 à 10% de l'inductance totale.

38. Dispositif selon l'une des revendications précédentes, **caractérisé en ce que** le noyau (55) du transmetteur (53) se compose de deux demis noyaux en U allongé.

39. Dispositif selon la revendication 38, **caractérisé en ce que** les branches du noyau (55') présentant les deux enroulements séparés dans l'espace (54 et 56) sont plus éloignées l'une de l'autre que les branches (55") du noyau sensiblement en forme d'anneau rectangulaire qui relient ces branches (55').

40. Dispositif selon la revendication 39, **caractérisé en ce que** les selfs (54 et 56) sont des bobines planes qui le cas échéant se chevauchent partiellement.

41. Dispositif selon l'une des revendications précédentes, **caractérisé en ce que** la tension de service fournie par les deux blocs d'alimentation (9) est respectivement amenée au support (4) par le biais d'un transmetteur séparable (59, 57), la bobine secondaire (57) du transmetteur étant affectée au support (4) et la bobine primaire (59) à la carte réseau, ladite bobine secondaire (57) étant reliée au circuit secondaire uniquement lorsque le bloc d'alimentation est enfiché et fournit une tension.

42. Dispositif selon l'une des revendications précédentes, **caractérisé par** un relais (61), alimenté par un transformateur auxiliaire relié à un circuit primaire du bloc d'alimentation (9), qui sert à commuter une bobine secondaire (57) d'un transmetteur (57, 59) du bloc d'alimentation (9).

43. Dispositif selon l'une des revendications précédentes, **caractérisé en ce que** plusieurs enroulements secondaires (57) de blocs d'alimentation (9) respectivement affectés sont câblés en parallèle sur le support (4).

44. Dispositif selon l'une des revendications 1 à 43, **caractérisé en ce que** les enroulements secondaires (57) de blocs d'alimentation (9) respectivement affectés sont câblés en série sur le support (4).

45. Dispositif selon l'une des revendications précédentes, **caractérisé en ce que** l'inductance (44) est affectée à une borne de raccordement disposée dans la zone antidéflagrante pour au moins un appareil de terrain (3).

46. Dispositif selon l'une des revendications 1 à 44, **caractérisé en ce que** l'inductance (44) est affectée à un coffret de commande (2) disposé dans une zone non explosive.
